# EUROPÄISCHE PATENTSCHRIFT

(11) **EP 1 752 510 B1**
(45) Veröffentlichungstag und Bekanntmachung des Hinweises auf die Patenterteilung: **26.11.2008**
(21) Anmeldenummer: 06015972.0
(22) Anmeldetag: 01.08.2006
(51) Int. Cl.: C09K 19/34

(54) **Flüssigkristallines Medium**
Liquid crystalline medium
Milieu liquide cristallin

(30) Priorität: 09.08.2005 DE 102005038039
(43) Veröffentlichungstag der Anmeldung: 14.02.2007
(73) Patentinhaber: Merck Patent GmbH, 64293 Darmstadt (DE)
(72) Erfinder: Klasen-Memmer, Melanie, 67259 Heuchelheim (DE); Bremer, Matthias, 64295 Darmstadt (DE); Hornung, Barbara, 63594 Hasselroth (DE); Schmidt, Wolfgang, 63303 Dreieich (DE); Wingen, Rainer, 65719 Hofheim (DE)

(56) Entgegenhaltungen:
- WO-A-00/36054
- WO-A-02/055463
- WO-A-20/05105772
- DE-A1- 19 531 165
- US-A1- 2005 258 399

## Beschreibung

Die Erfindung betrifft ein flüssigkristallines Medium auf der Basis eines Gemisches von polaren Verbindungen, welches mindestens eine Verbindung der Formel I, 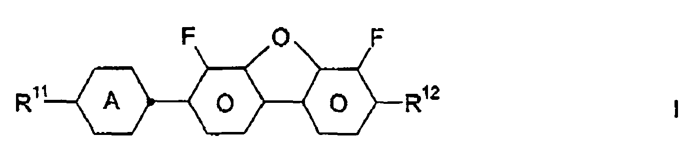 worin
R¹¹ und R¹² jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 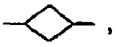 -C≡C-, -CF₂O-, -OCF₂-, -OC-O- oder -O-CO- so ersetzt sein können, dass O-Atome nicht direkt miteinander verknüpft sind, 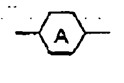
a) einen 1,4-Cyclohexenylen- oder 1,4-Cyclohexylen-rest, worin eine oder zwei nicht benachbarte CH₂-Gruppen durch -0- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, einen Naphthalin-2,6-diyl, Decahydronaphthalin-2,6-diyl, 1,2,3,4-Tetrahydro-naphthalin-2,6-diyl, Phenanthren-2,7-diyl, Fluoren-2,7-diyl,
   wobei die Reste a), b) und c) ein oder mehrfach durch Halogenatome, vorzugsweise ein oder zwei Fluoratome, substituiert sein können,
bedeuten,
und zusätzlich eine oder mehrere Verbindungen der Formeln IIA und/oder IIB, 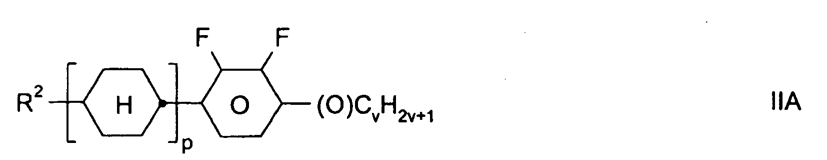 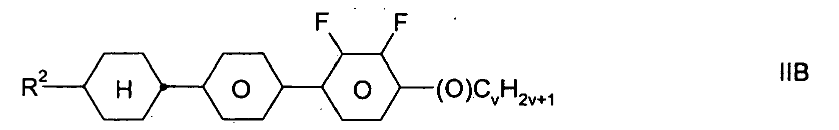 worin
R² einen unsubstituierten, einen einfach durch CN oder CF₃ oder einen mindestens einfach durch Halogen substituierten Alkyl-oder Alkenylrest mit bis zu 15 C-Atomen, wobei in diesen Resten auch eine oder mehrere CH₂-Gruppen jeweils unabhängig voneinander durch -O-, -S-, 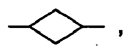 -C≡C-, -CO-, -CO-O-, -O-CO- oder -O-CO-O- so ersetzt sein können, dass O-Atome nicht direkt miteinander verknüpft sind,
p
1 oder 2, und
v
1 bis 6
bedeutet,
enthält.

Derartige Medien sind insbesondere für elektrooptische Anzeigen mit einer Aktivmatrix-Addressierung basierend auf dem ECB-Effekt sowie für IPS-Anzeigen (In plane switching) zu verwenden. Vorzugsweise besitzt das erfindungsgemäße Medium eine negative dielektrische Anisotropie.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den sogenannten IPS-Effekt verwenden, können dielektrisch negative Flüsigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfor dernissen entspricht Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die bisplaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFTs aus Verbindungshalbleitem wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil-oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984; Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel I enthalten. Verbindungen der Formel I sind beispielsweise bekannt aus der WO 2002/055463.

Gegenstand der Erfindung ist somit ein flüssigkristallines Medium auf der Basis eines Gemisches von polaren Verbindungen, welches mindestens eine Verbindung der Formel I und eine oder mehrere Verbindungen der Formeln IIA und/oder IIB enthält.

Die erfindungsgemäßen Mischungen zeigen sehr breite nematische Phasenbereiche mit Klärpunkten ≥ 85 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten. Weiterhin zeichnen sich die erfindungsgemäßen Mischungen durch ein gutes Verhältnis von Klärpunkt und Rotationsviskosität und eine hohe negative dielektrische Anisotropie aus.

Einige bevorzugte Ausführungsformen der erfindungsgemäßen Mischungen werden im folgenden genannt:
a) R¹¹ und/oder R¹² in den Verbindungen in der Formel I bedeuten vorzugsweise H, Alkyl, Alkenyl oder Alkoxy mit bis zu 6 C-Atomen, insbesondere bevorzugt bedeuten R¹¹ und R¹² Alkyl, wobei der Alkylrest gleich oder verschieden sein kann. R¹² bedeutet ganz besonders bevorzugt Alkoxy oder Alkenyloxy.
b) Flüssigkristallines Medium, worin R¹¹ in Formel 1 vorzugsweise folgende Bedeutungen hat: geradkettiges Alkyl, Vinyl, 1 E-Alkenyl oder 3-Alkenyl.
   Falls R¹ Alkenyl bedeutet, so ist es vorzugsweise CH₂=CH, CH₃-CH=CH, C₃H₇-CH=CH, CH₂=CH-C₂H₅ oder CH₃-CH=CH-C₂H₅.
c) Flüssigkristallines Medium, welches ein, zwei, drei, vier oder mehr, vorzugsweise ein oder zwei, Verbindungen der Formel I enthält.
d) Flüssigkristallines Medium, wobei der Anteil an Verbindungen der Formel I im Gesamtgemisch mindestens 2 Gew.%, vorzugsweise mindestens 4 Gew.%, besonders bevorzugt 2-20 %, beträgt.
e) (entfällt)
f) Flüssigkristallines Medium, welches zusätzlich eine oder mehrere Verbindungen der Formel III enthält, 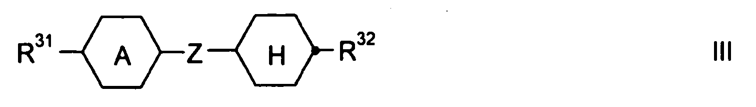 worin
   R³¹ und R³² jeweils unabhängig voneinander einen geradkettigen Alkyl-, Alkenyl-, Alkylalkoxy- oder Alkoxyrest mit bis zu 12 C-Atomen, und 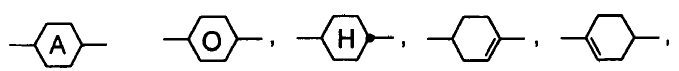 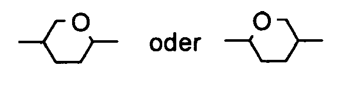 Z Einfachbindung, -CH₂CH₂-, -CH=CH-, -CF₂O-, -OCF₂-, -CH₂O-, -OCH₂, -COO-, -OCO-, -C₂F₄-, -CF=CF-
   bedeuten.
g) Flüssigkristallines Medium, wobei der Anteil an Verbindungen der Formeln IIA und/oder IIB im Gesamtgemisch mindestens 20 Gew.% beträgt.
h) Flüssigkristallines Medium, wobei der Anteil der Verbindungen der Formel III im Gesamtgemisch mindestens 5 Gew.% beträgt.
i) Flüssigkristallines Medium, welches mindestens eine Verbindung ausgewählt aus den Teilformeln I1 bis 19 enthält: 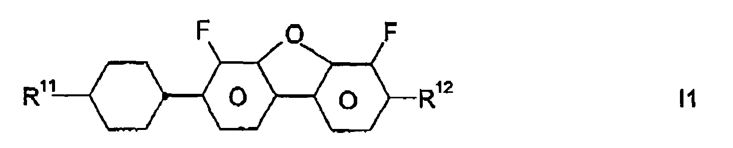 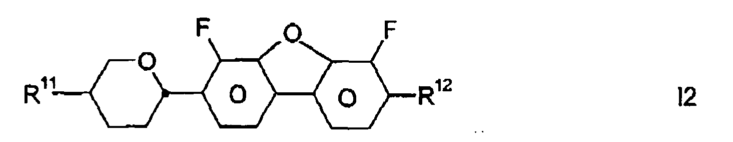 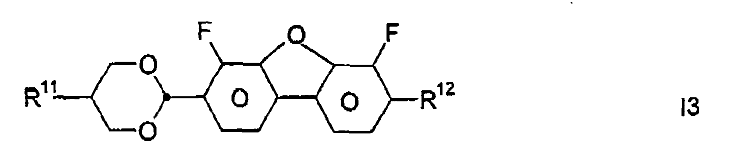 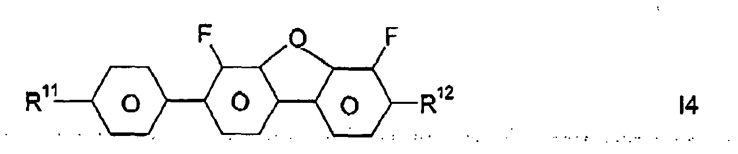 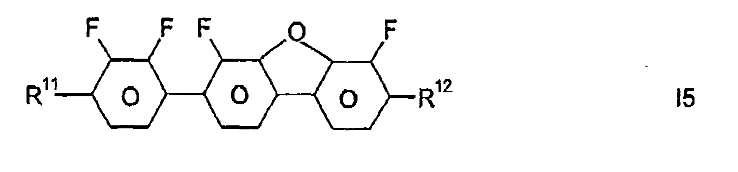 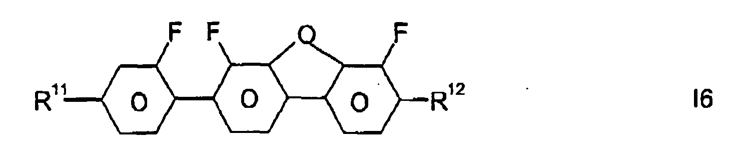 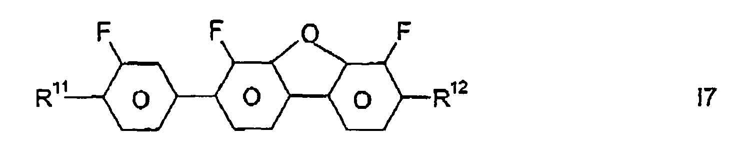 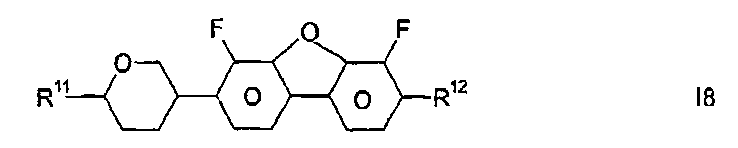 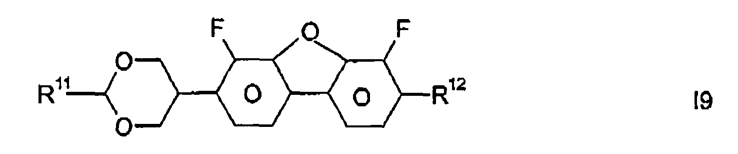
j) Flüssigkristallines Medium, welches zusätzlich eine oder mehrere Verbindungen ausgewählt aus den Formeln IIIa bis IIIj enthält; 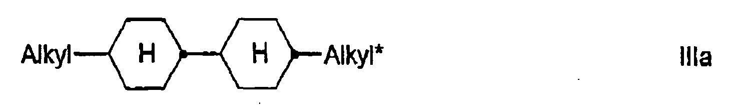 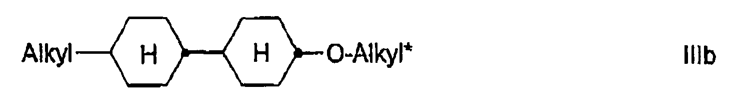 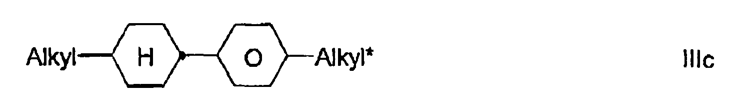 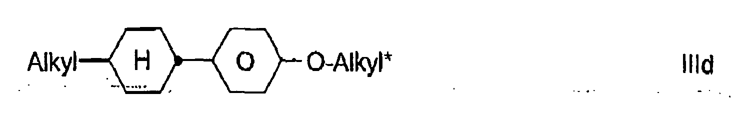 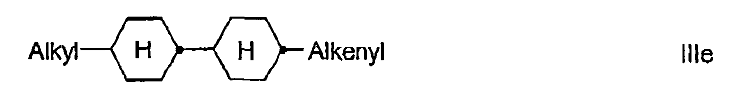 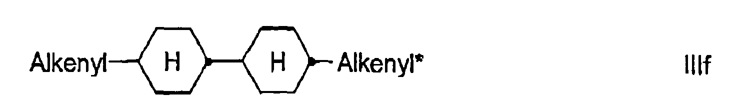 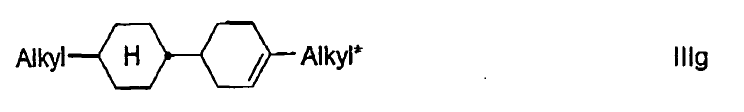 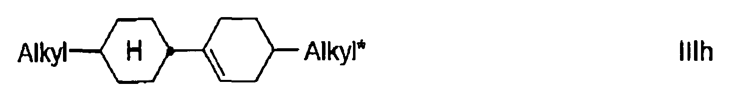 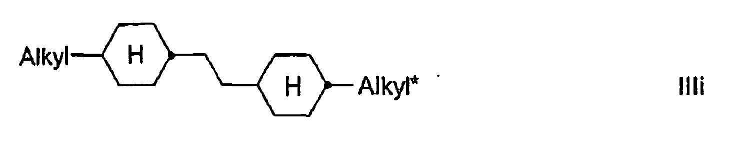 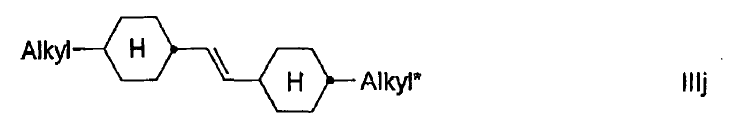 worin
   Alkyl und Alkyl* jeweils unabhängig voneinander einen geradkettigen Alkylrest mit 1-6 C-Atomen, und
   Alkenyl und Alkenyl* jeweils unabhängig voneinander einen geradkettigen Alkenylrest mit 2-6 C-Atomen
   bedeuten.
   Vorzugsweise enthält das erfindungsgemäße Medium mindestens eine Verbindung der Formel IIIa, IIIb und/oder IIIe.
   Besonders bevorzugte Verbindungen der Formeln IIIe und IIIf werden nachfolgend genannt: 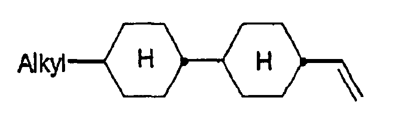 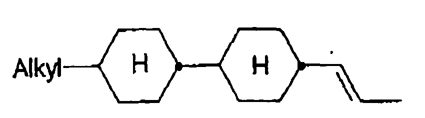 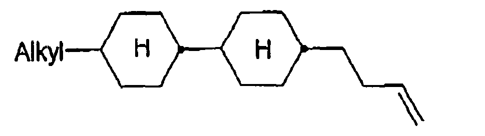 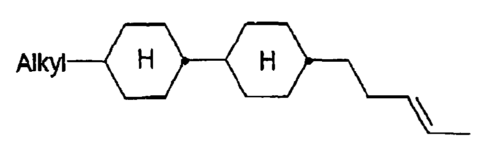 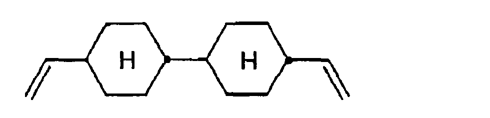 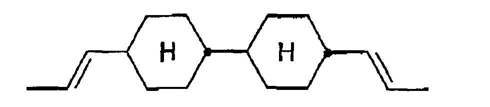 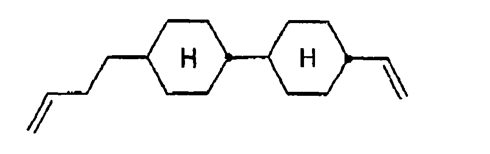 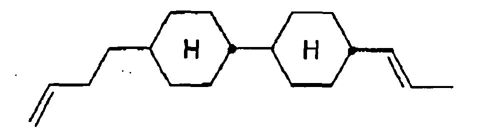 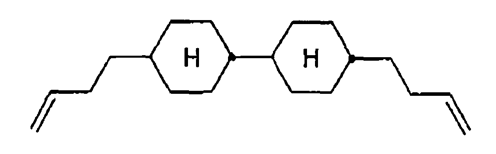
   Besonders bevorzugte erfindungsgemäße Medien enthalten eine Verbindung der Formel 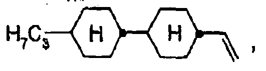 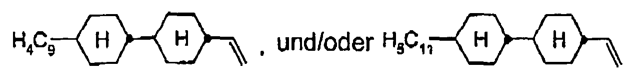 in Mengen von 30-60 Gew.%, vorzugsweise 30-50 Gew.%.
k) Flüssigkristallines Medium, welches
   2-20 Gew.% einer oder mehrerer Verbindungen der Formel und
   20-80 Gew.% einer oder mehrerer Verbindungen der Formeln IIA und/oder IIB
   enthält bzw. daraus besteht, wobei die Gesamtmenge der Verbindungen der Formeln I und IIA und/oder IIB ≤ 100 Gew.% beträgt.
l) Flüssigkristallines Medium, welches zusätzlich eine oder mehrere Vierkernverbindungen der Formeln, 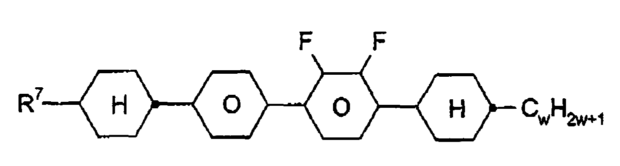 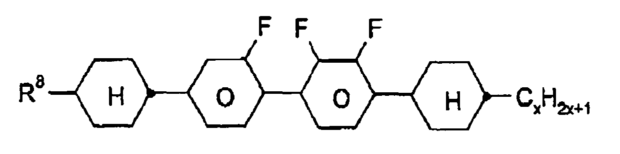 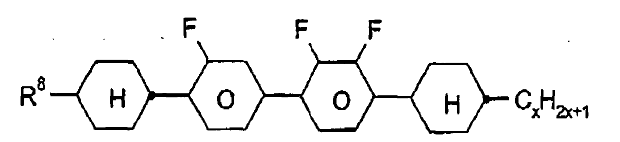 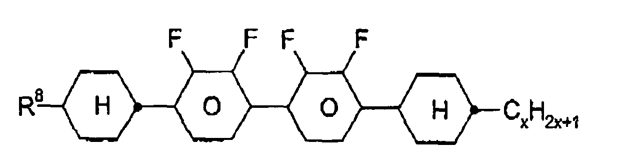 worin
   R⁷und R⁸ jeweils unabhängig voneinander eine der in Anspruch 1 für R¹¹ angegebenen Bedeutung haben, und
   w und x jeweils unabhängig voneinander 1 bis 6
   bedeuten,
   enthält.
n) Flüssigkristallines Medium, welches zusätzlich eine oder mehrere Verbindungen der Formeln Y-1 bis Y-11 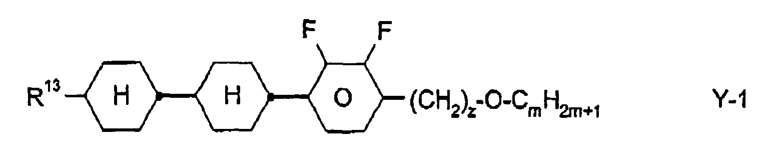 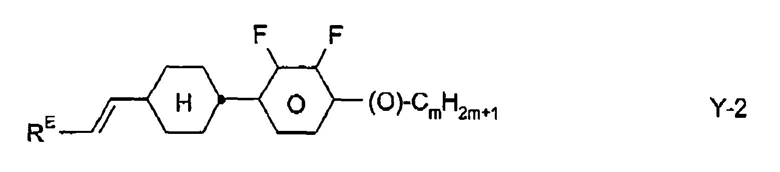 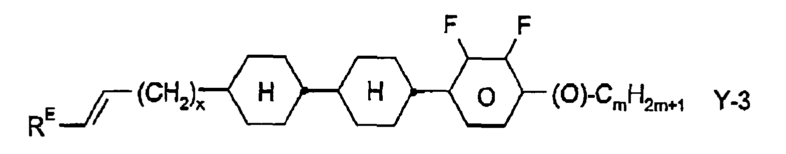 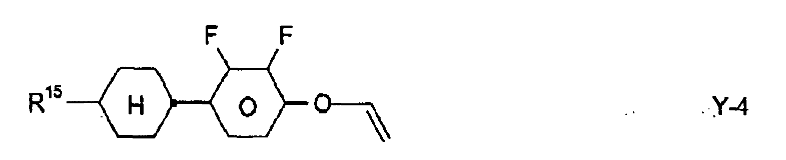 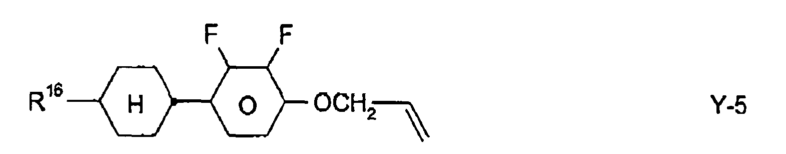 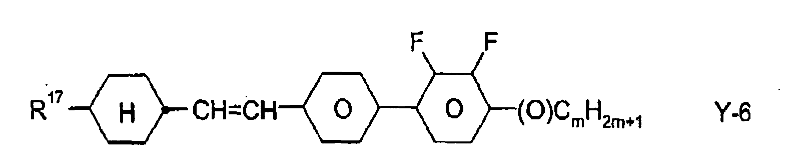 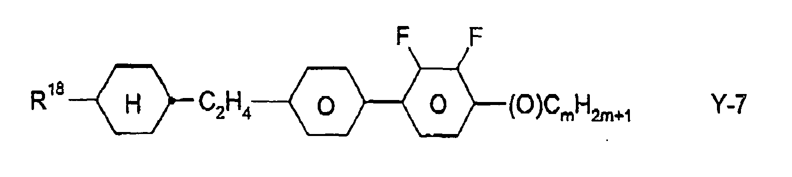 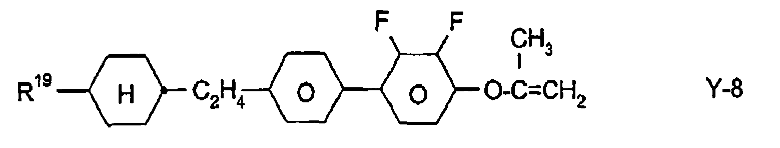 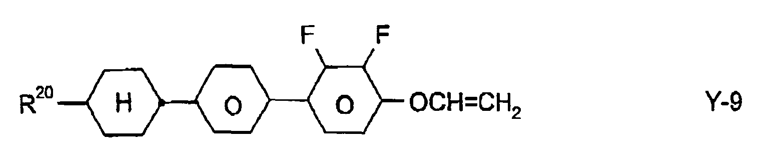 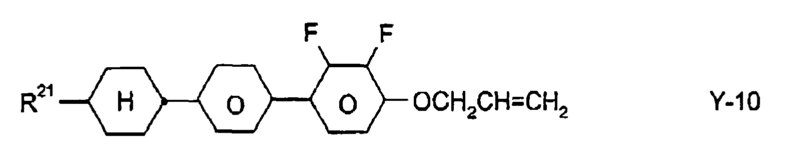 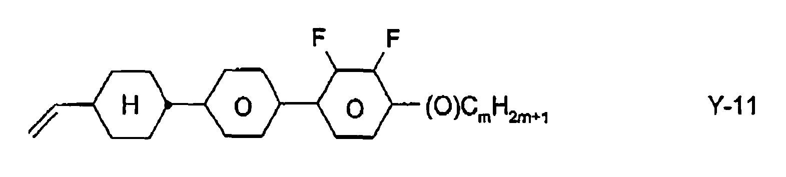 enthält,
   worin R¹³-R²² jeweils unabhängig voneinander, die für R¹¹ angegebenen Bedeutungen haben, und z und m jeweils unabhängig voneinander 1-6 bedeuten. R^{E} bedeutet H, CH₃, C₂H₅ oder n-C₃H₇.
   x bedeutet 0, 1, 2 oder 3.
   Insbesondere bevorzugt enthält das erfindungsgemäße Medium eine oder mehrere Verbindungen der Formeln Y-2, Y-3, Y-11 mit einer Alkenylseitenkette.
o) Flüssigkristallines Medium, welches zusätzlich eine oder mehrere Verbindungen der Formeln 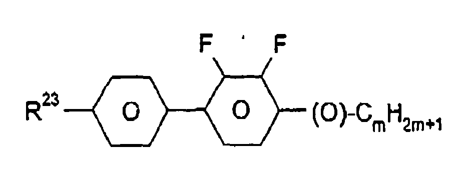 vorzugsweise in Mengen von > 3 Gew.%, insbesondere ≥ 5 Gew.%, und ganz besonders bevorzugt von 5-25 Gew.% enthält,
   wobei
   R²³ die für R¹¹ angegebenen Bedeutungen hat und m 1-6 bedeutet.
p) Flüssigkristallines Medium enthaltend zusätzlich ein oder mehrere fluorierte Terphenyle der Formeln T-1 bis T-22, 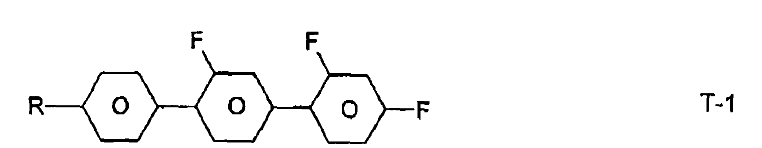 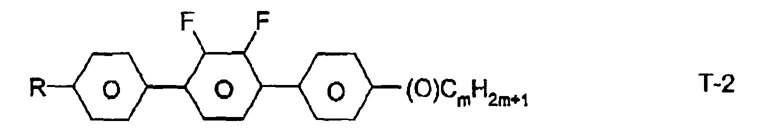 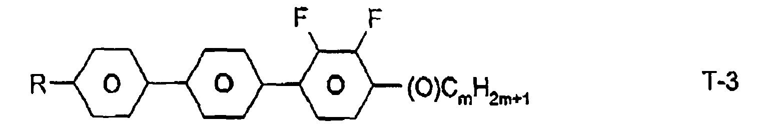 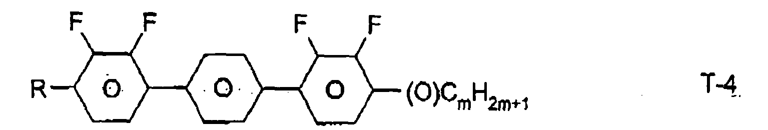 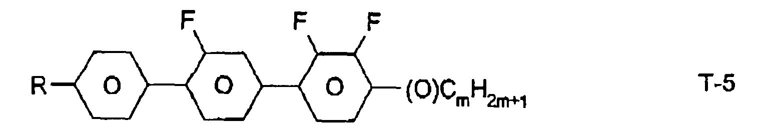 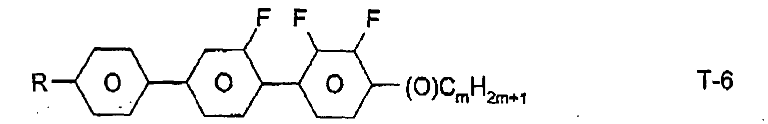 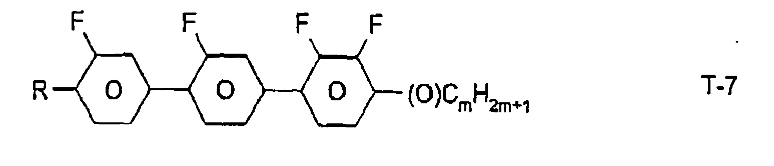 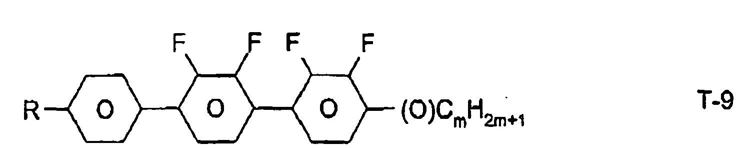 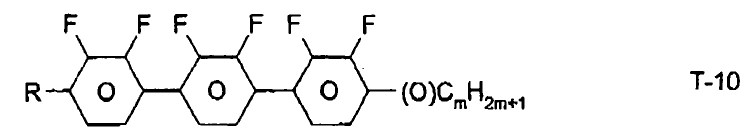 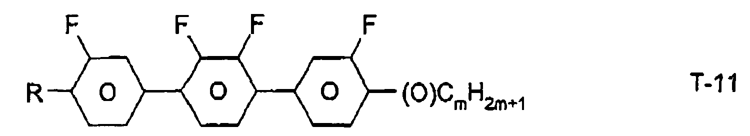 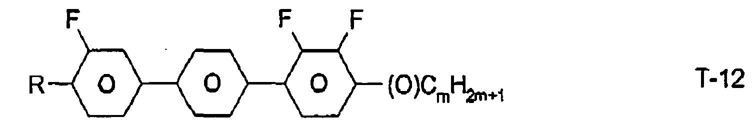 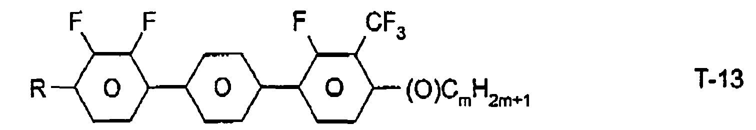 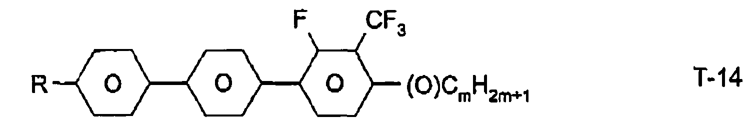 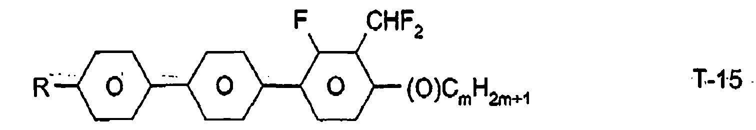 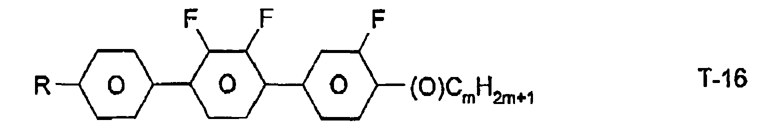 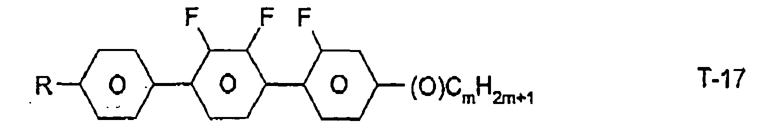 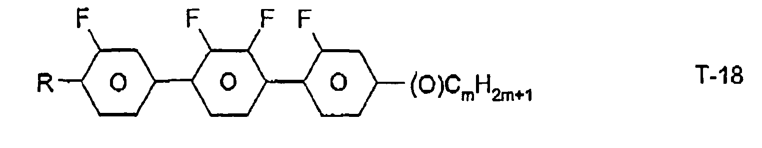 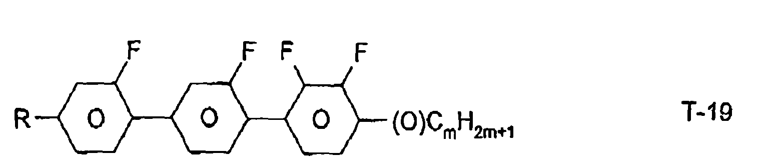 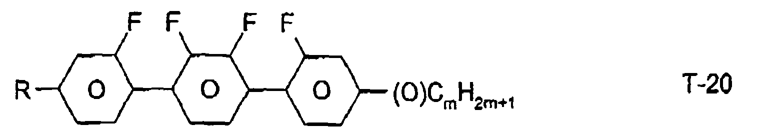 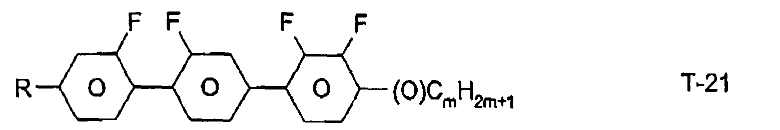 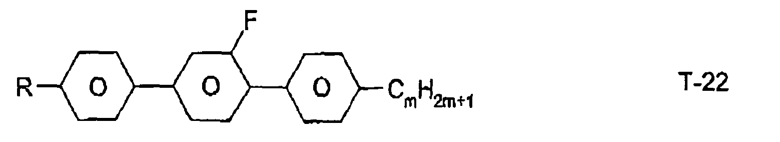 worin
   R die für R¹¹ angegebenen Bedeutungen hat.
   Vorzugsweise ist R geradkettiges Alkyl, Alkoxy oder Alkoxyalkyl mit jeweils 1-6 C-Atomen, Alkenyl oder Alkenyloxy mit 2-6 C-Atomen. Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-22 vorzugsweise in Mengen von 2-30 Gew.-%, insbesondere von 5-20 Gew.-%.
   Besonders bevorzugt sind Verbindungen der Formeln T-1, T-2, T-3 und T-22. In diesen Verbindungen bedeutet R vorzugsweise Alkyl, ferner Alkoxy jeweils mit 1-5 C-Atomen.
   Vorzugsweise werden die Terphenyle in Mischungen mit einem Δn ≥ 0,10 in Kombination mit den Verbindungen der Formeln I, IIA, IIB und III eingesetzt. Bevorzugte Mischungen enthalten 2-20 Gew,-% Terphenyle und 5-60 Gew.-% der Verbindungen der Formel IIA und/oder IIB.
q) Flüssigkristallines Medium enthaltend zusätzlich ein oder mehrere Biphenyle der Formeln B-1 bis B-5, 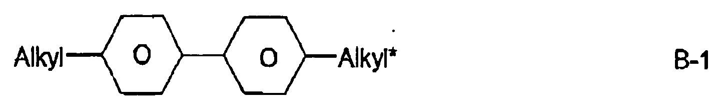 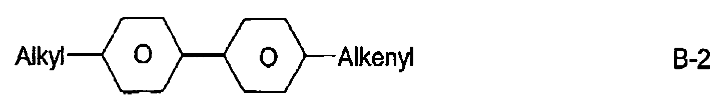 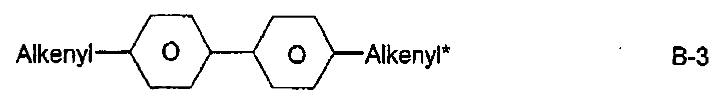 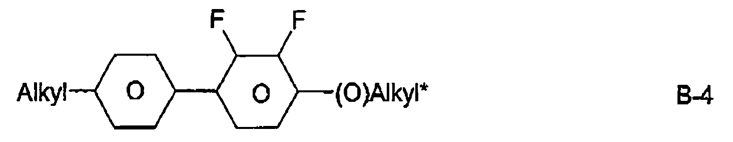 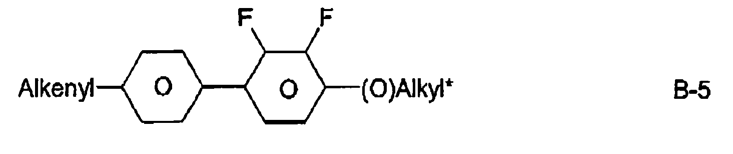 worin Alkyl, Alkyl*, Alkenyl und Alkenyl* die oben angegebenen Bedeutungen haben.
   Der Anteil der Biphenyle der Formeln B-1 bis B-5 der Gesamtmischung beträgt vorzugsweise mindestens 3 Gew.-%, insbesondere ≥ 5 Gew.-%.
   Von den Verbindungen der Formeln B-1 bis B-5 sind die Verbindungen der Formeln B-1 und B-4 insbesondere bevorzugt.
   Bevorzugte Biphenyle sind ebenfalls 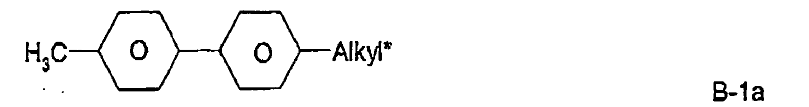 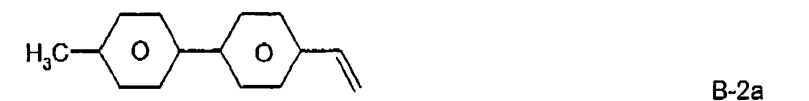 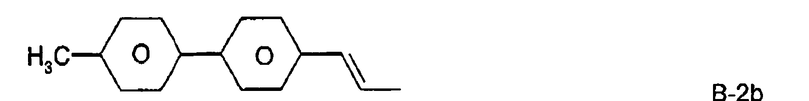 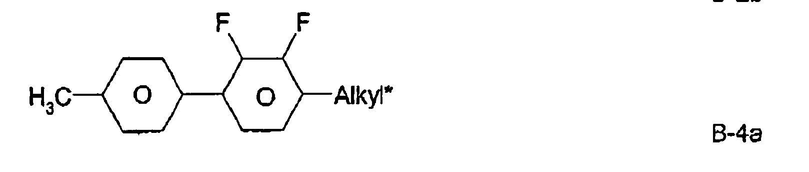 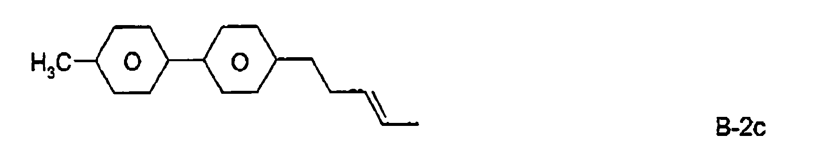 worin
   R Alkyl, Alkenyl, Alkoxy, Alkoxyalkyl, Alkenyloxy mit 1 bzw. 2 bis 6 C-Atomen bedeutet und Alkenyl die oben angegebene Bedeutung hat. Insbesondere enthält das erfindungsgemäße Medium eine oder mehrere Verbindungen aus der Gruppe der Verbindungen der Formeln B-1 a und/oder B-2c.
r) Flüssigkristallines Medium, welches zusätzlich eine oder mehrere Verbindungen der Formeln 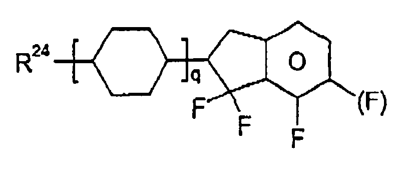 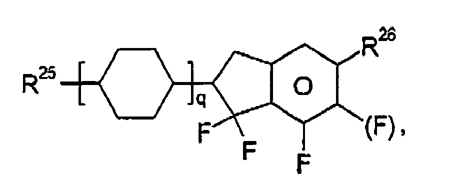 vorzugsweise in Mengen von > 3 Gew.%, insbesondere ≥ 5 Gew,%, und ganz besonders bevorzugt von 5-25 Gew.% enthält,
   wobei
   R²⁴⁻²⁵ die für R¹¹ angegebenen Bedeutungen haben und R²⁶ CH₃, C₂H₅ oder n-C₃H₇ und q 1 oder 2 bedeutet.
s) Flüssigkristallines Medium enthaltend zusätzlich mindestens eine Verbindung der Formeln Z-1 bis Z-21, 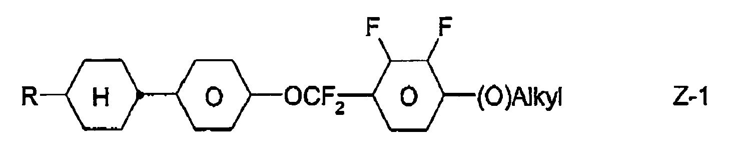 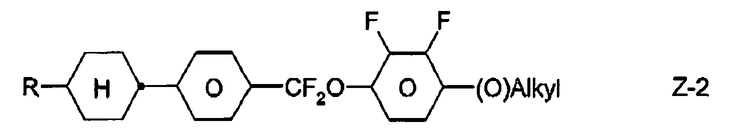 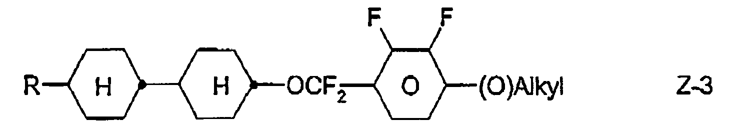 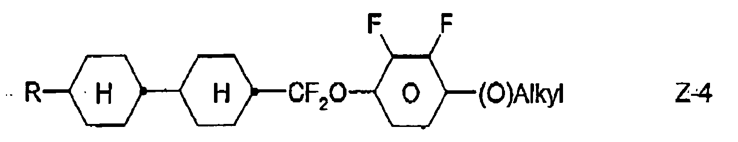 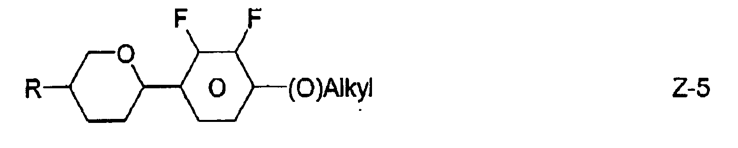 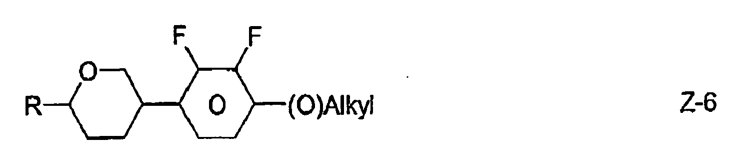 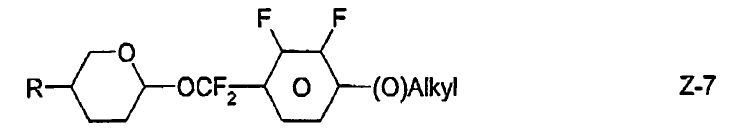 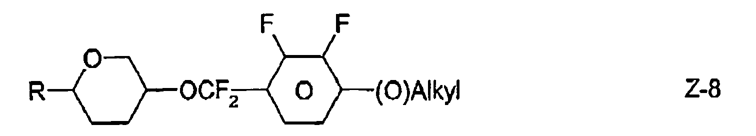 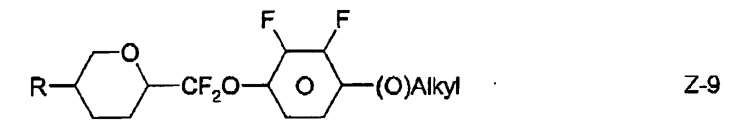 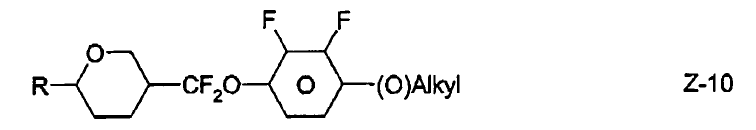 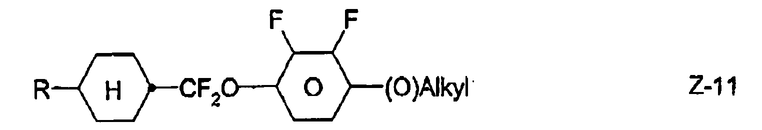 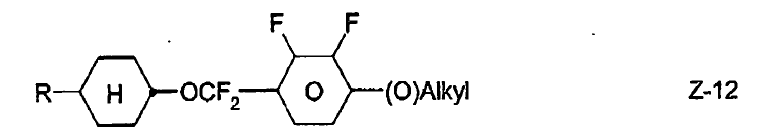 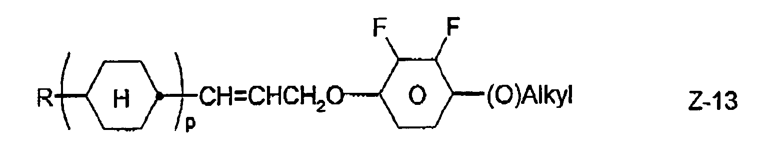 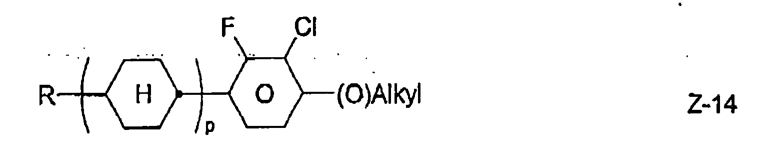 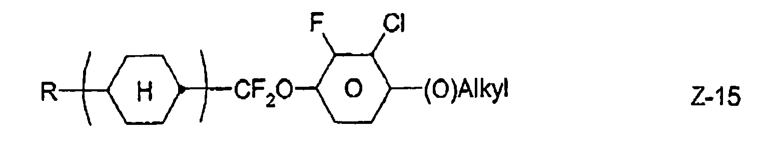 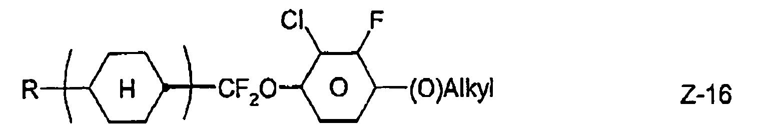 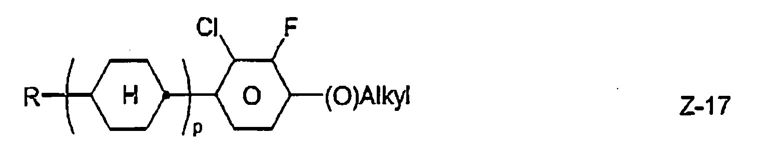 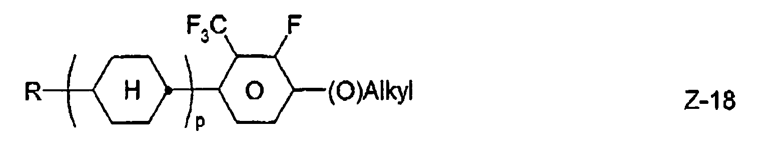 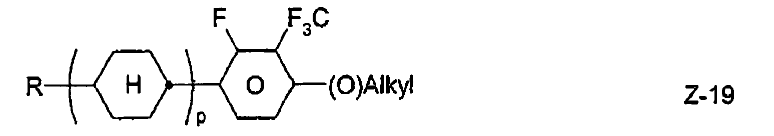 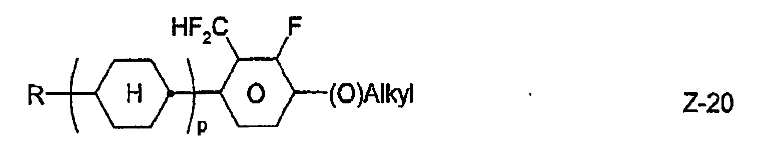 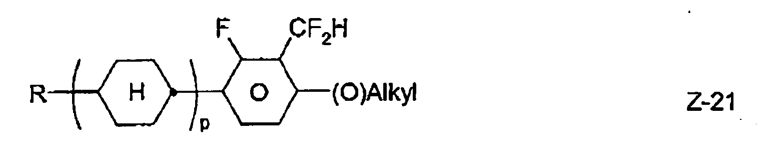 worin
   R und Alkyl die oben angegebenen Bedeutungen haben und p 1 oder 2 ist,
   vorzugsweise in Mengen von ≥ 5 Gew.-%, insbesondere ≥ 10 Gew.-%.
   Insbesondere bevorzugt sind Medien, die eine, zwei oder mehr Verbindungen der Formeln Z-1 bis Z-13 enthalten und zusätzlich eine, zwei oder mehr Verbindungen der Formel II, Vorzugsweise enthalten derartige Mischungen ≥ 10 Gew.-% an Verbindungen der Formel II.
t) Flüssigkristallines Medium enthaltend mindestens eine Verbindung der Formeln 0-1 bis O-12, 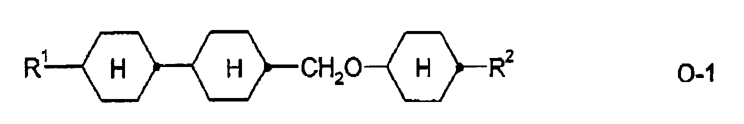 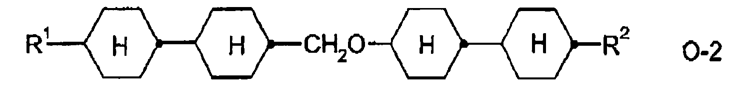 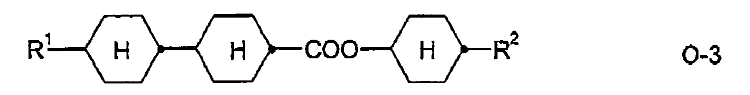 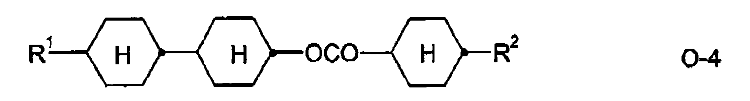 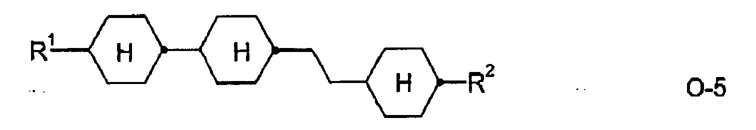 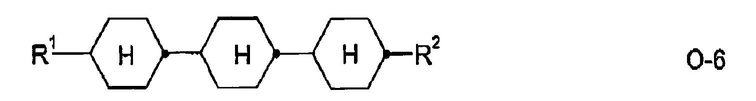 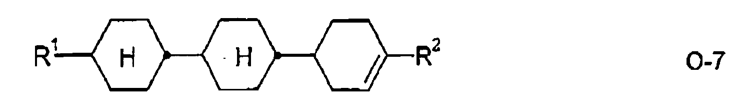 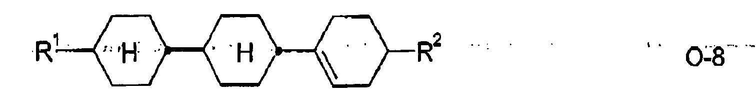 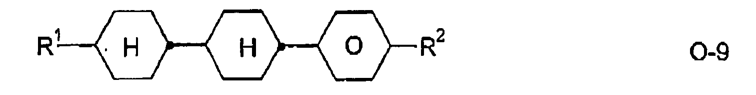 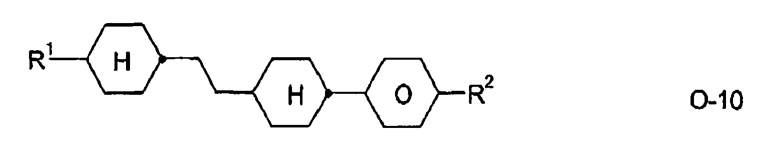 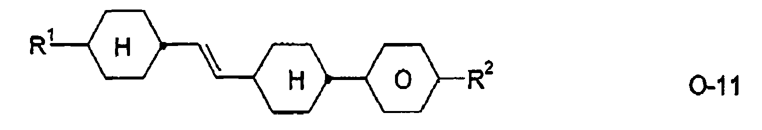 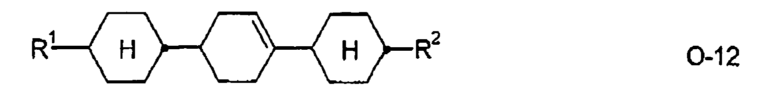
worin R¹ und R² die für R¹¹ angegebenen Bedeutungen haben, vorzugsweise bedeuten R¹ und R² jeweils unabhängig voneinander geradkettiges Alkyl, ferner Alkenyl.

Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5 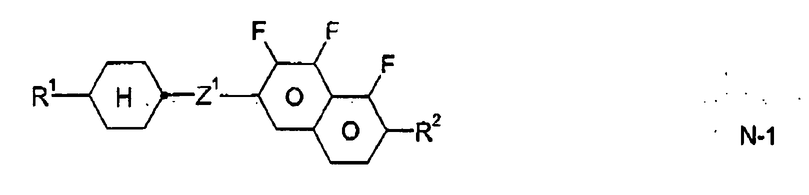 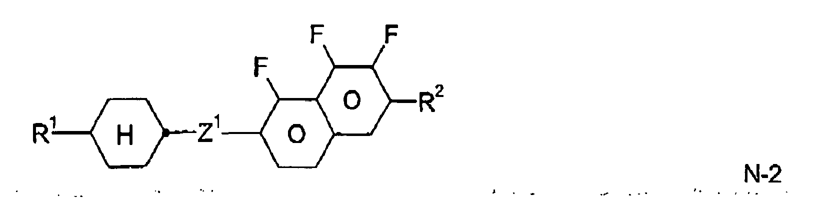 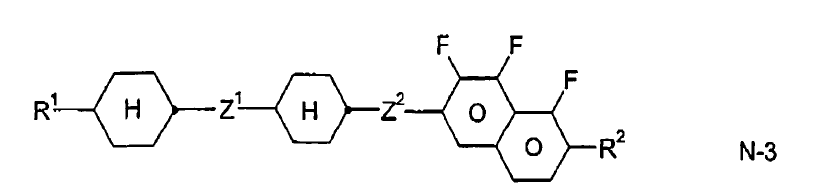 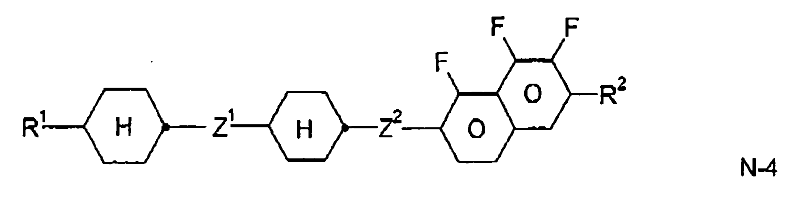 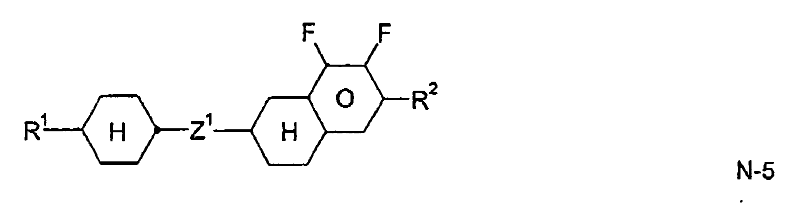 worin R¹ und R² jeweils unabhängig voneinander die für R¹¹ angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung
bedeuten.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 9 enthält.

Vorzugsweise weist die Flüssigkristallmischung einen nematischen Phasenbereich von mindestens 60 K und eine Fließviskosität ν₂₀ von maximal 30 mm² · s⁻¹ bei 20 °C auf.

Die erfindungsgemäße Flüssigkristallmischung weist ein Δε von -0,5 bis - 8,0, insbesondere von -3,0 bis -6,0 auf, wobei Δε die dielektrische Anisotropie bedeutet. Die Rotationsviskosität γ₁ ist vorzugsweise < 200 mPa·s, insbesondere < 170 mPa·s.

Die Doppelbrechung Δn in der Flüssigkristallmischung liegt in der Regel, zwischen 0,07 und 0,16, vorzugsweise zwischen 0,08 und 0,12.

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt Verbindungen der Formeln I, IIA, IIB und/oder III.

Der Anteil der Komponente A liegt vorzugsweise zwischen 45 und 100 %, insbesondere zwischen 60 und 900 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm² · s⁻¹, vorzugsweise nicht mehr als 25 mm² · s⁻¹, bei 20°C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm² · s⁻¹, bei 20 °C.

Komponente B ist monotrop oder enantiotrop nematisch und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, und besonders bevorzugt < 10, Verbindungen der Formeln I, IIA und/oder IIB und optional III.

Neben Verbindungen der Formeln I, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
- G: -CH=CH- -N(O)=N-
-CH-CQ- -CH=N(O)-
-C≡C- -CH₂-CH₂-
-CO-O- -CH₂-O-
-CO-S- -CH₂-S-
-CH=N- -COO-Phe-COO-
-CF₂O- -CF=CF-
-OCF₂- -OCH₂-
-(CH₂)₄- -(CH₂)₃O-
oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS-, FFS- oder PALC-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m, z: jeweils unabhängig voneinander 1, 2, 3, 4, 5 oder 6)

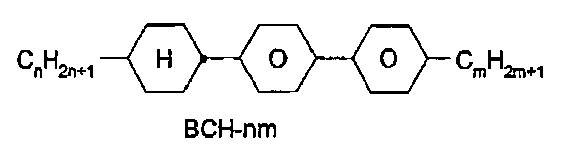

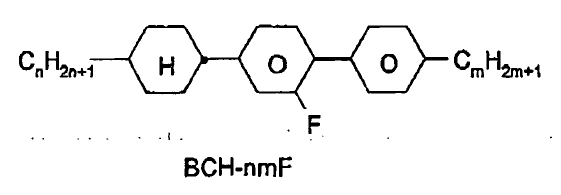

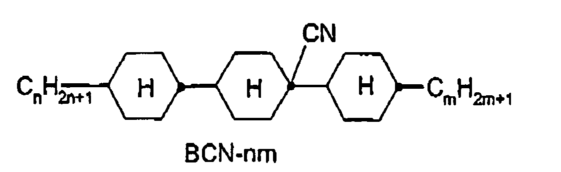

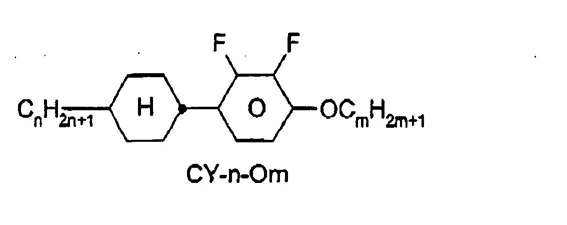

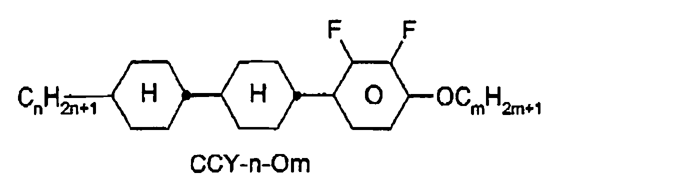

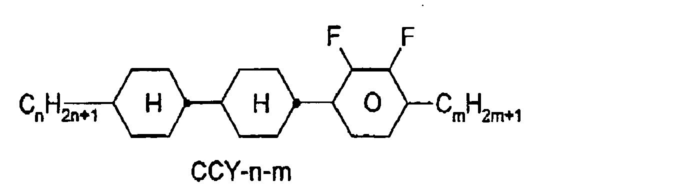

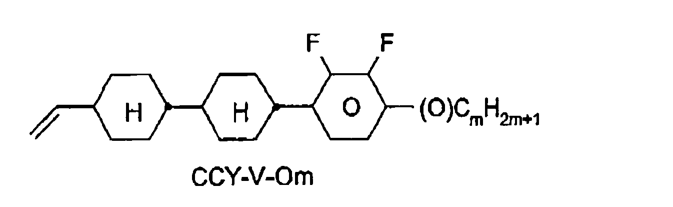

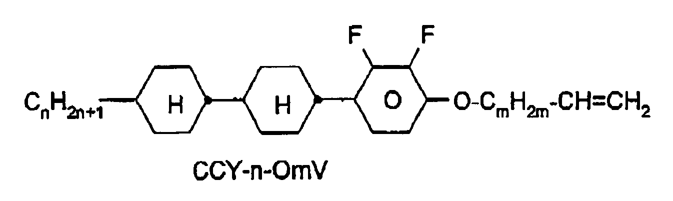

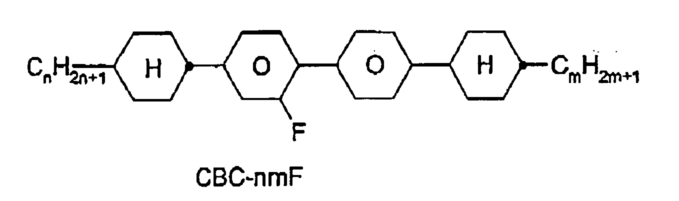

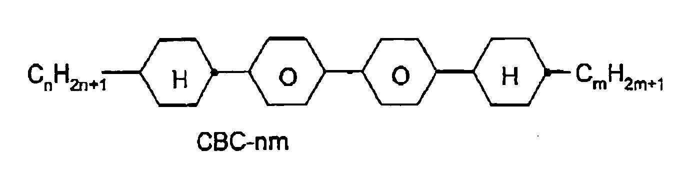

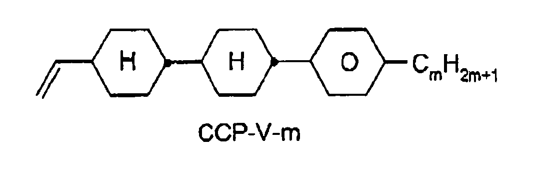

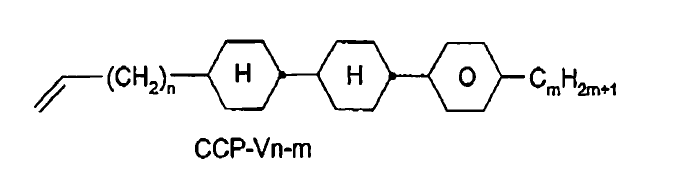

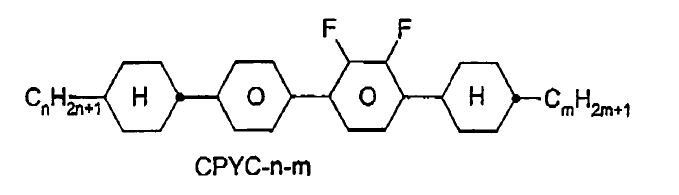

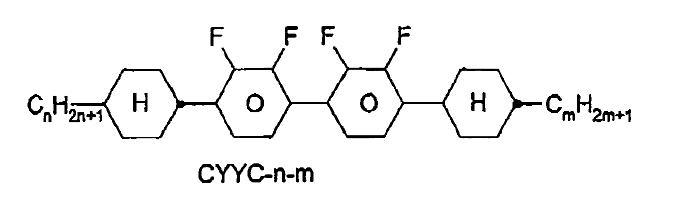

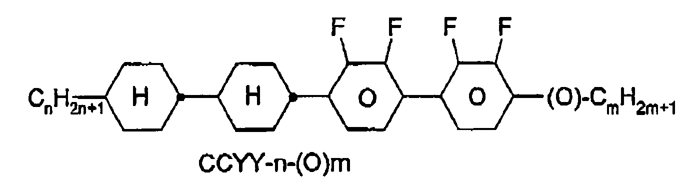

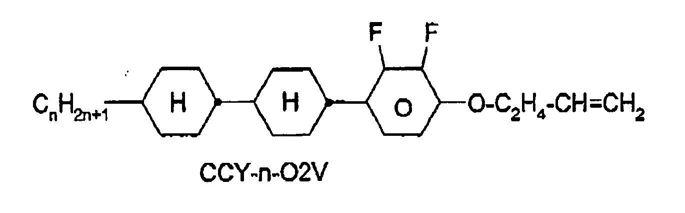

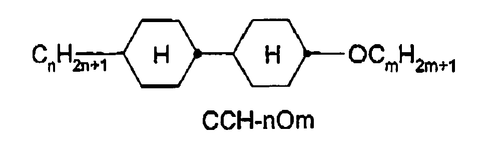

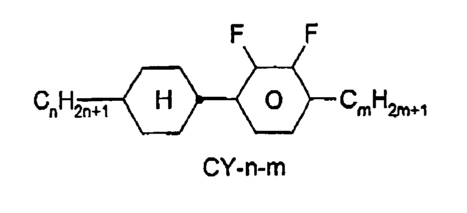

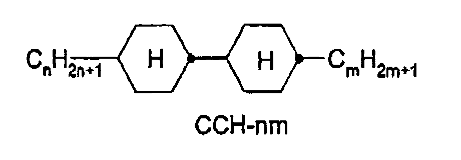

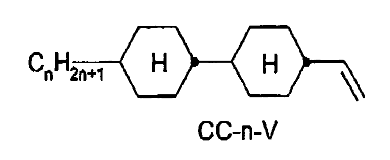

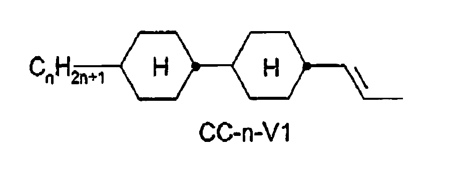

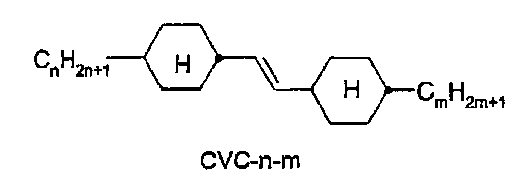

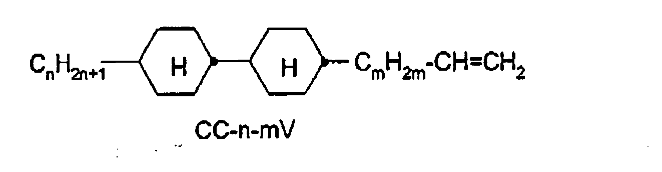

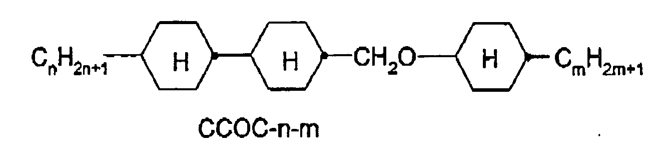

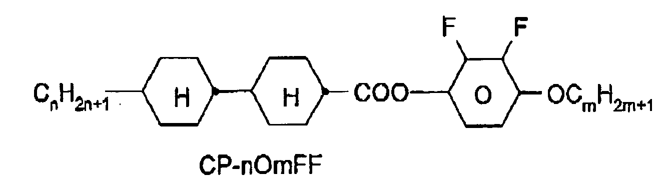

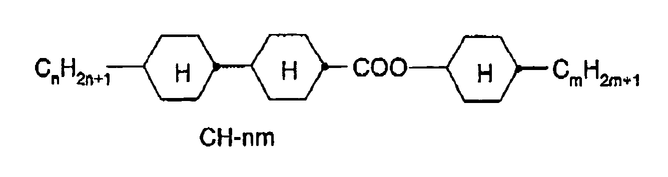

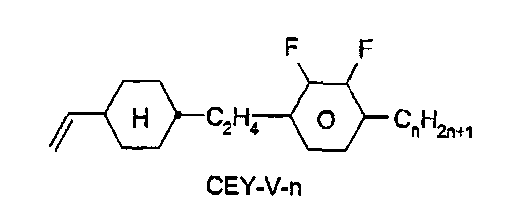

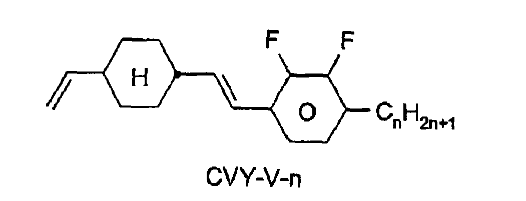

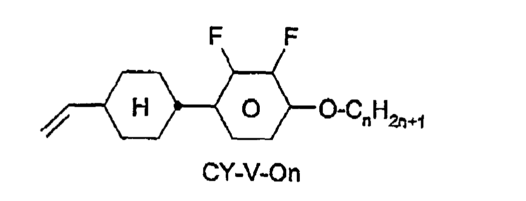

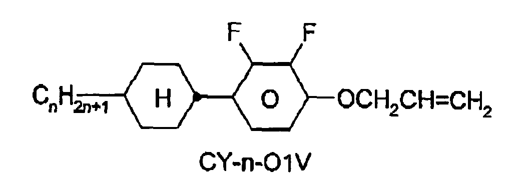

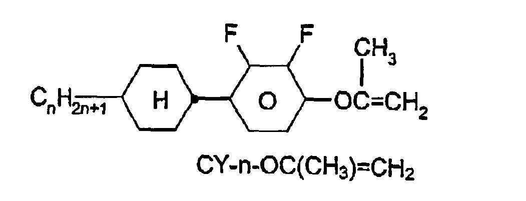

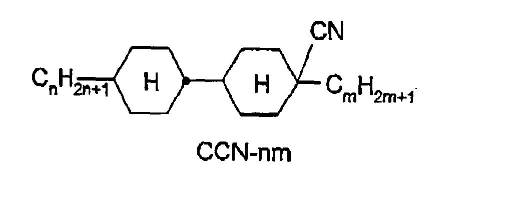

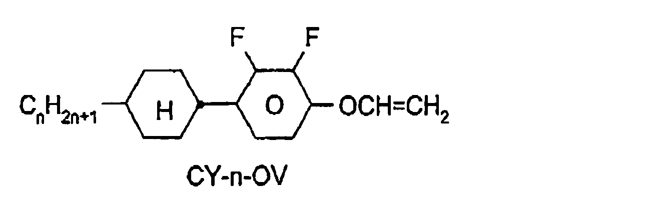

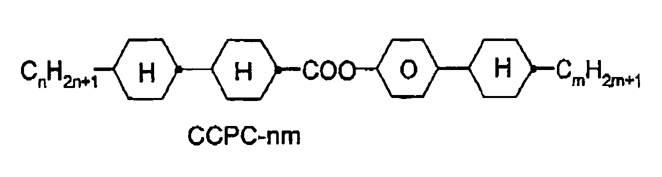

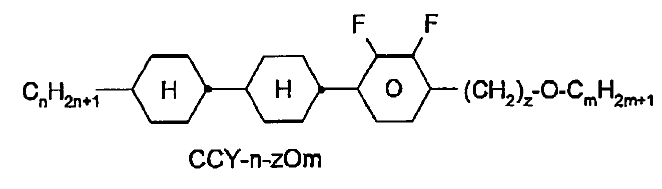

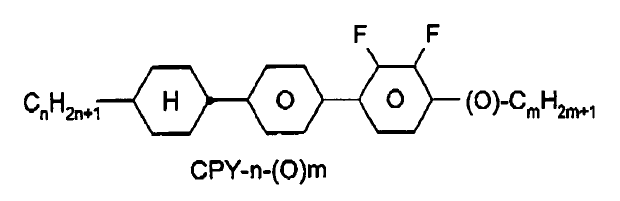

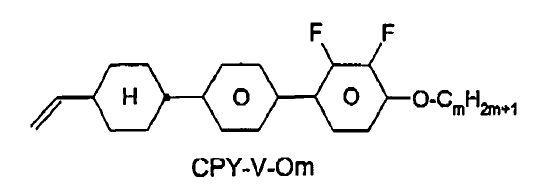

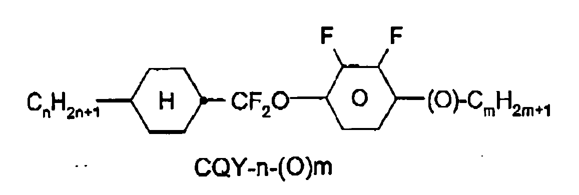

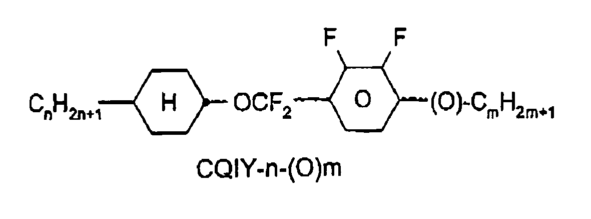

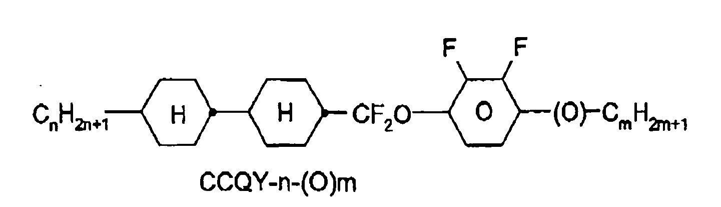

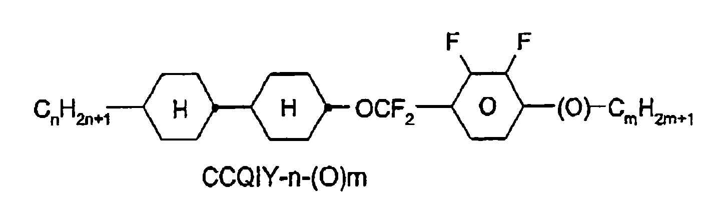

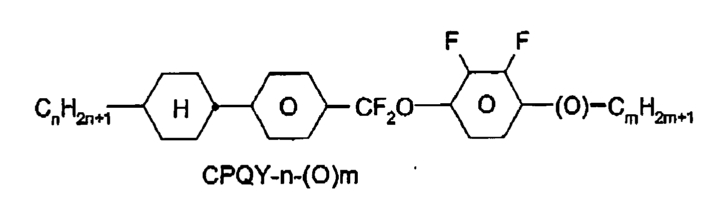

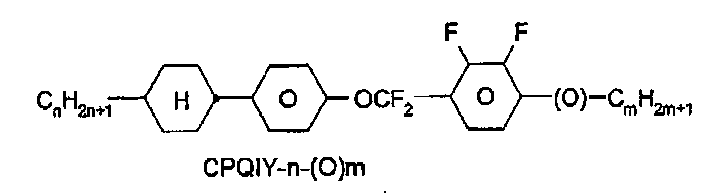

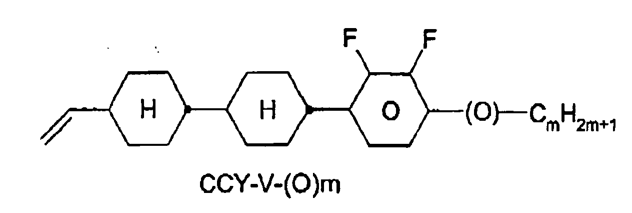

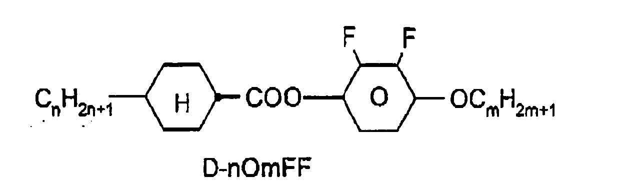

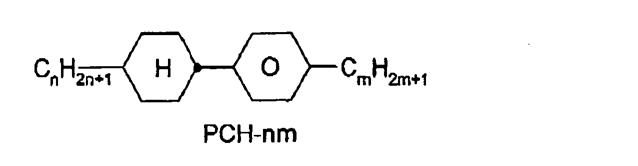

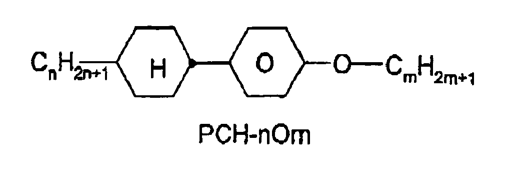

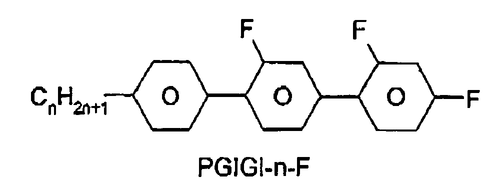

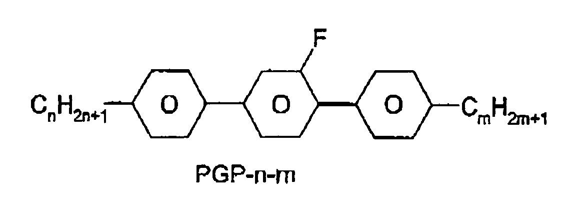

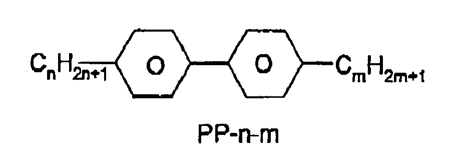

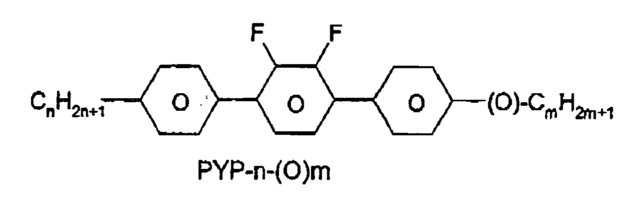

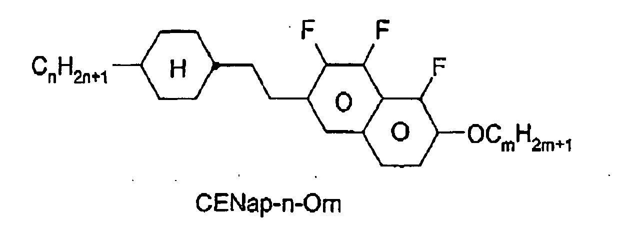

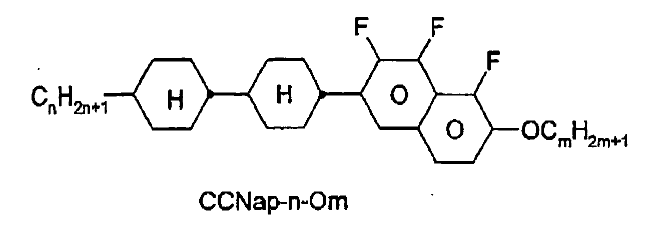

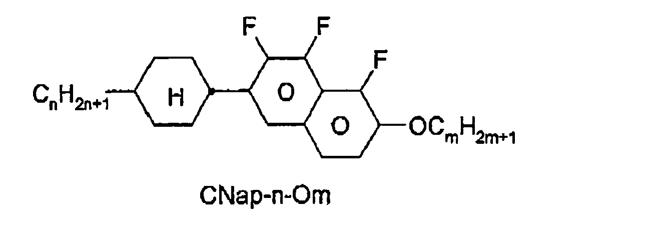

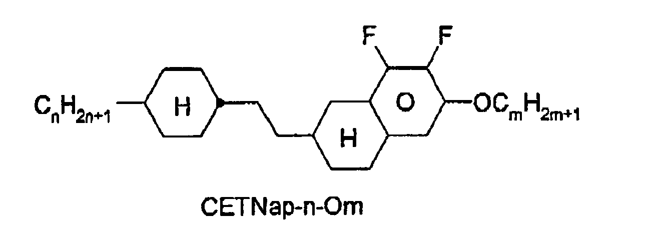

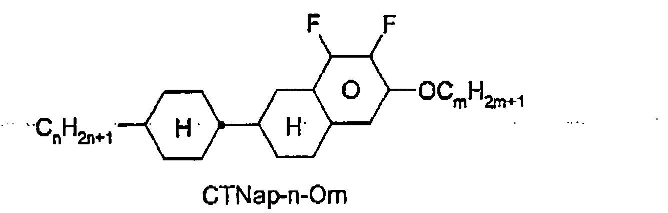

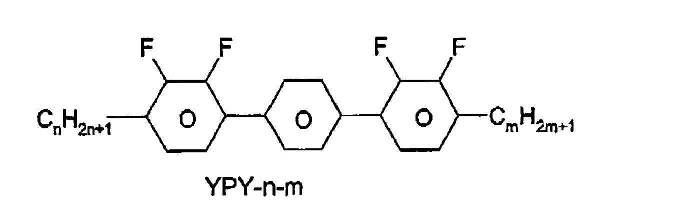

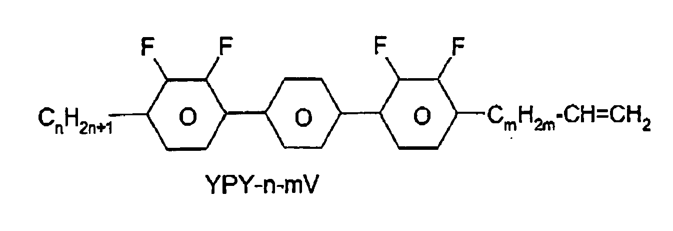

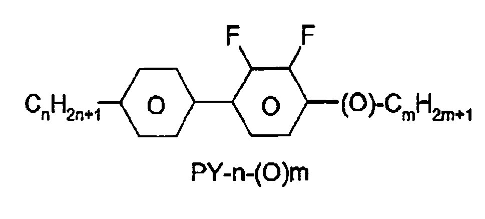

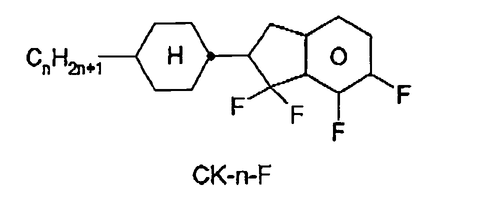

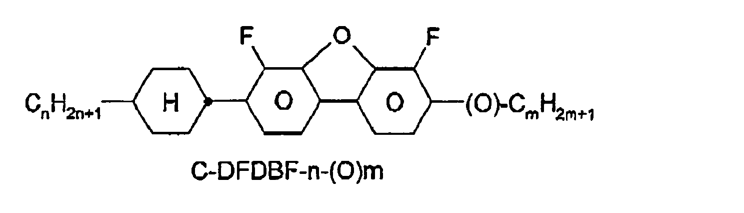

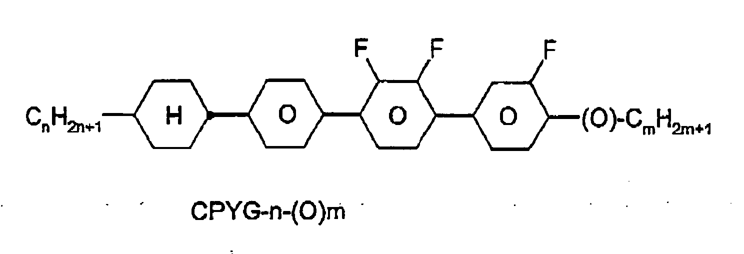

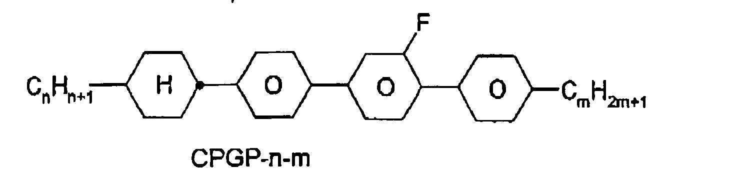

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Additive, wie z. B. UV-Absorber, Antioxidantien, Nanopartikel, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt wer den, ferner Leitsalze, vorzugsweise Ethyldimethyldodecylammonium-4-hexoxybenzoat, Tetrabutylammoniumtetraphenylboranat oder Komplexsalze von Kronenethem (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

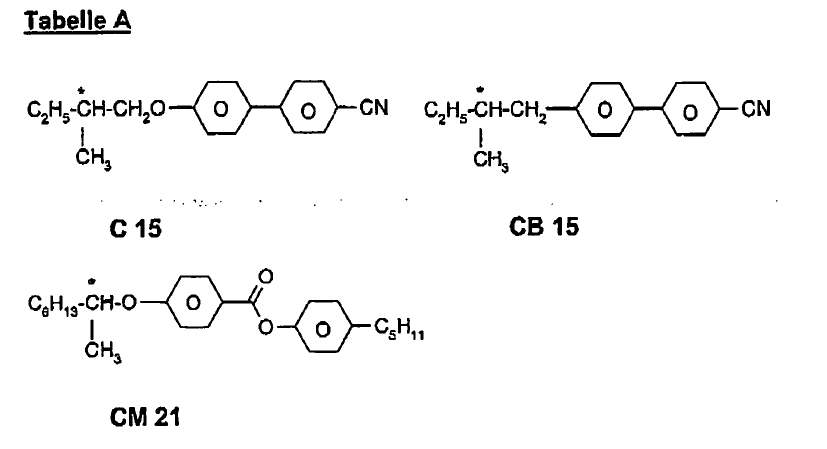

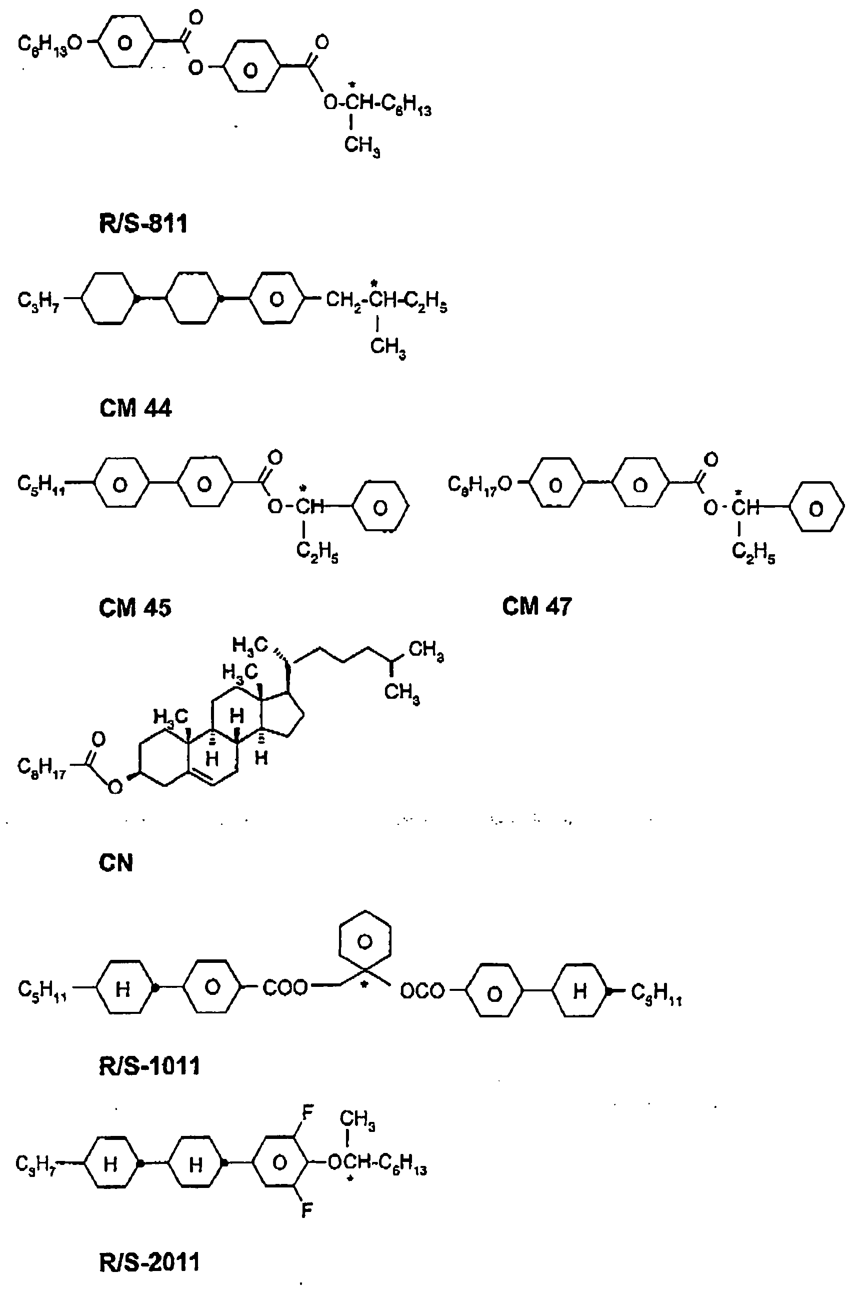

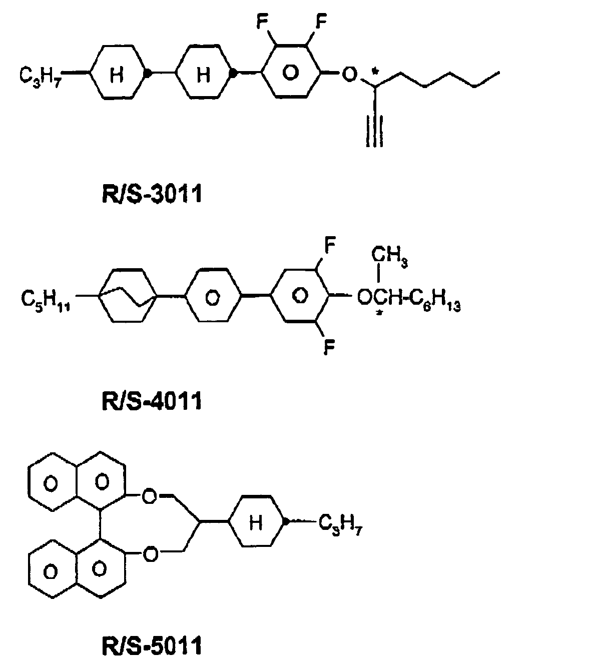

Stabilisatoren, die beispielsweise den erfindungsgemäßen Mischungen zugesetzt werden können, werden nachfolgend in Tabelle B genannt.

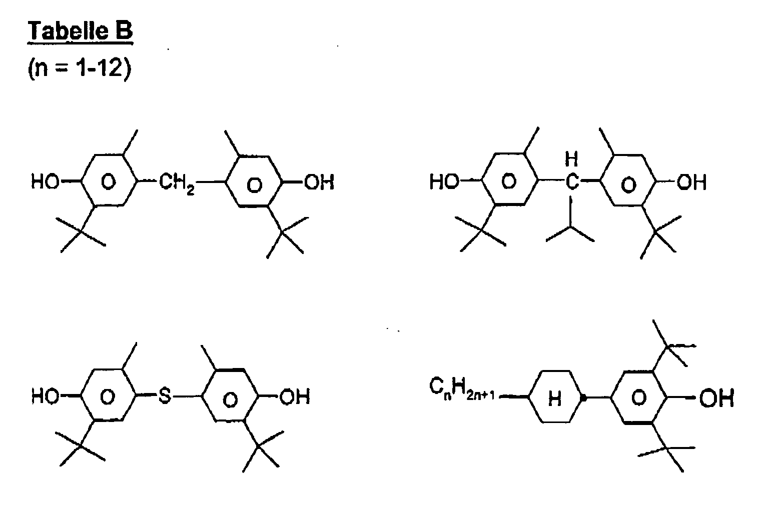

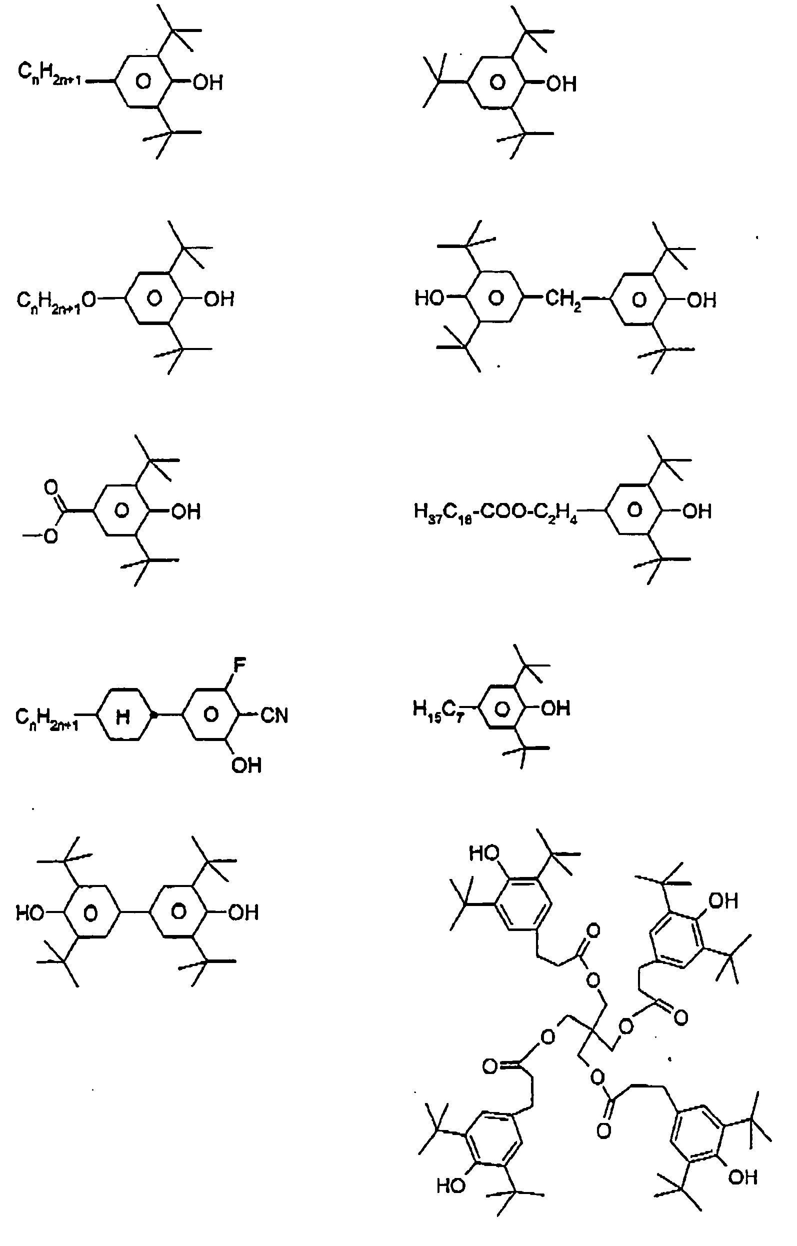

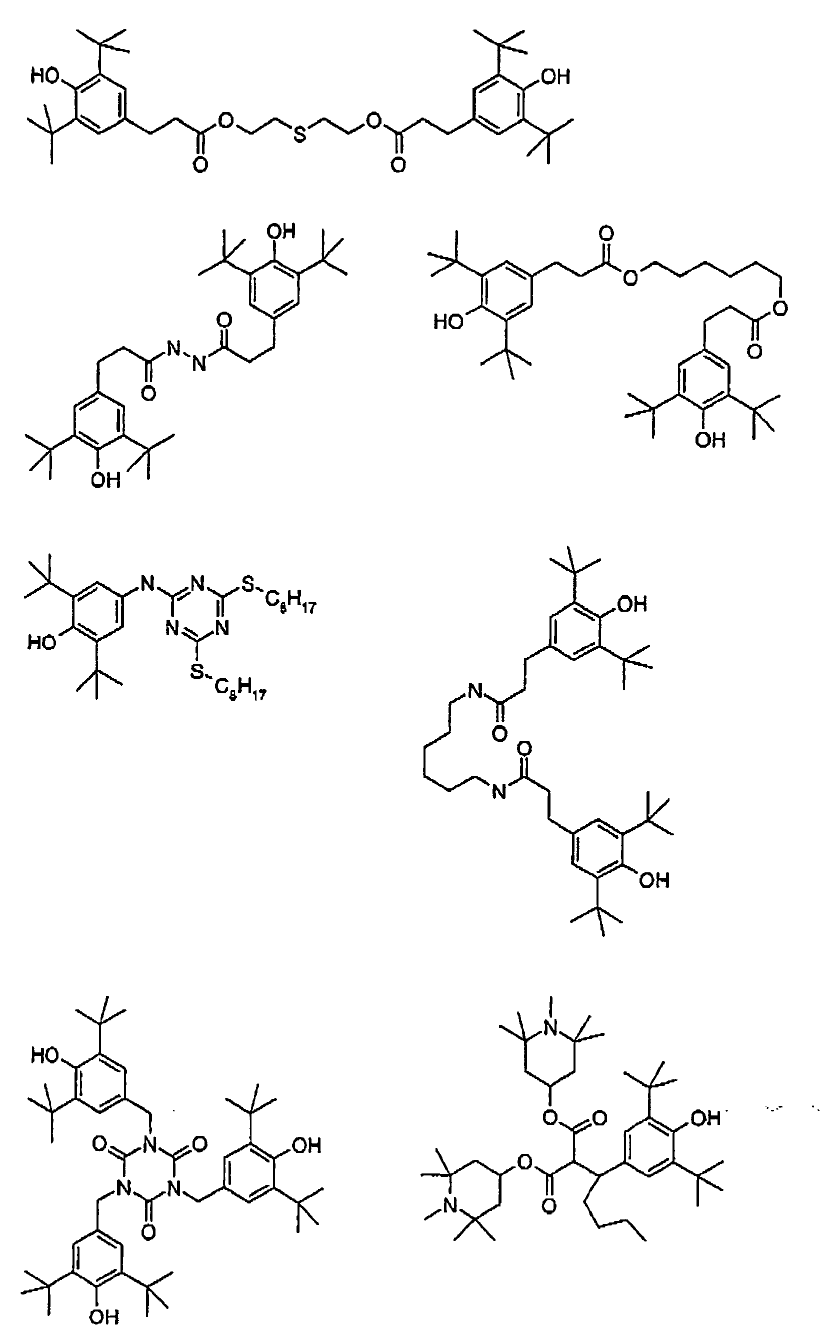

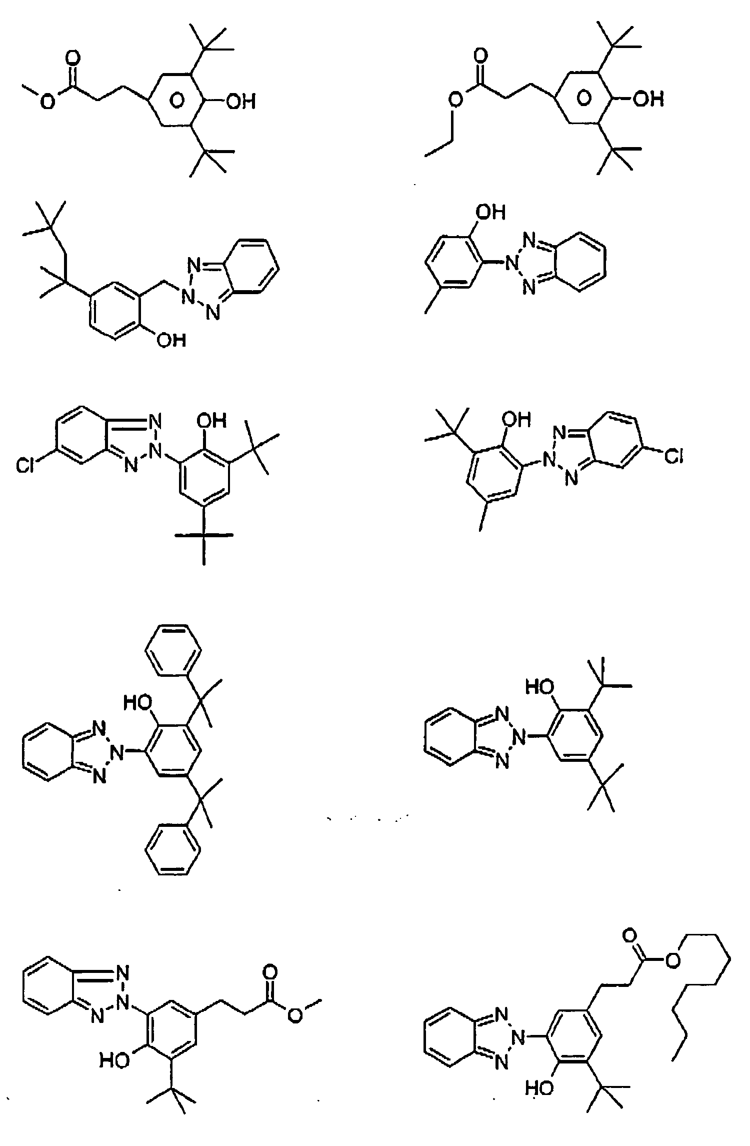

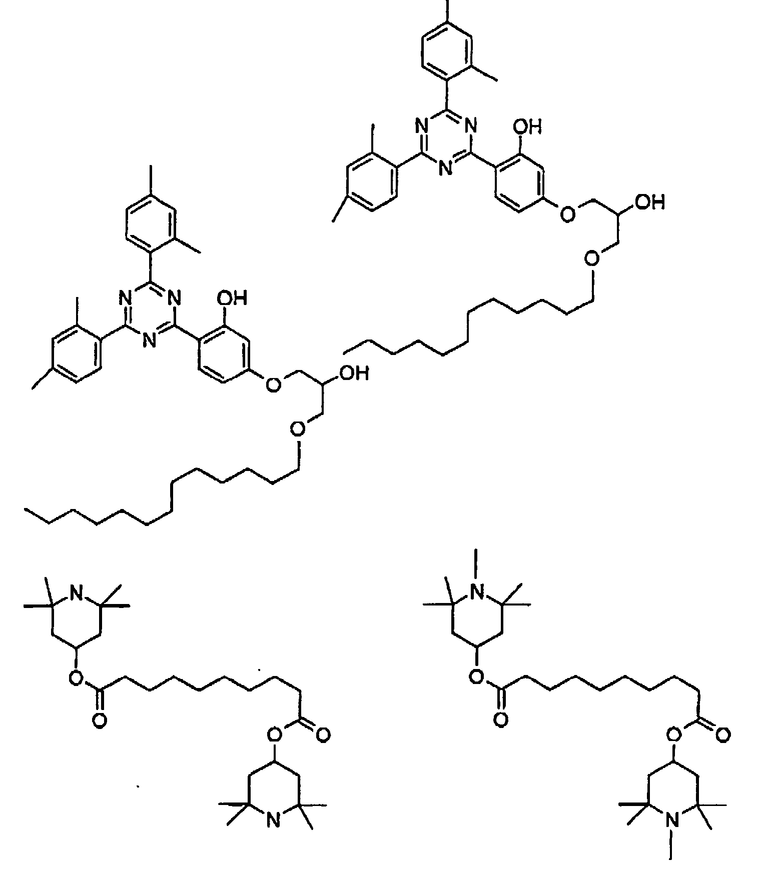

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- γ₁: Rotationsviskosität gemessen bei 20 °C [mPa·s]
- K₁: elastische Konstante, "Splay"-Deformation bei 20 °C [pN]

- K₃: elastische Konstante, "Bend"-Deformation bei 20 °C [pN]
- LTS: Low temperature stability (nematische Phase), bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

### Mischunqsbeispiele

### Beispiel 1

| | | | |
|---|---|---|---|
| CY-3-O4 | 19,00 % | Klärpunkt [°C]: | +95,0 |
| CY-5-O2 | 12,00 % | Δn [589 nm, 20 °C]: | +0,1115 |
| CCY-3-O2 | 11.00 % | Δε [1 kHz, 20 °C]: | -7,2 |
| CCY-3-O3 | 12,00 % | K₁ [pN, 20 °C]: | 14,5 |
| CCY-4-O2 | 12,00 % | K₃ [pN, 20 °C]: | 16,2 |
| CPY-2-O2 | 12,00 % | γ₁ [mPa·s, 20 °C]: | 317 |
| CPY-3-O2 | 3,00 % | V₀ [V]: | 1,58 |
| CC-4-V | 9,00 % | | |
| 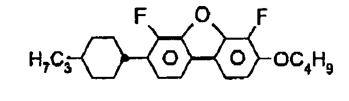 | 10,00 % | | |

### Beispiel 2

| | | | |
|---|---|---|---|
| CY-3-O4 | 16,00 % | Klärpunkt [°C]: | +95,0 |
| CCY-3-O3 | 11.00 % | Δn [589 nm, 20 °C]: | +0,1164 |
| CCY-4-O2 | 10,00 % | Δε [1 kHz, 20 °C]: | -7,3 |
| CPY-2-02 | 12,00 % | K₁ [pN, 20 °C]: | 14,0 |
| CPY-3-02 | 11,00 % | K₃ [pN, 20 °C]: | 15,3 |
| CC-4-V | 13,00 % | γ₁ [mPa·s, 20 °C]: | |
| PYP-2-3 | 2,00% | V₀ [V]: | 1,53 |
| 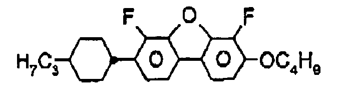 | 10,00 % | | |
| | | | |
| | | | |
| CK-3-F | 4,00% | | |
| CK-4-F | 7,00% | | |
| CK-5-F | 4,00% | | |

### Beispiel 3

| | | | |
|---|---|---|---|
| CY-3-O2 | 18,00 % | Klärpunkt [°C]: | +78,5 |
| CCY-3-O2 | 7,00 % | Δn [589 nm, 20 °C]: | +0,0834 |
| CCY-3-O3 | 13,00 % | Δε [1 kHz, 20 °C]: | -3,5 |
| CCY-4-O2 | 10,00% | K₁ [pN, 20 °C]: | 12,9 |
| CCPY-2-O2 | 5,00% | K₃ [pN, 20 °C]: 14,8 | 14,8 |
| CC-3-V | 42,00 % | γ₁ [mPa·s, 20 °C]: | 93 |
| 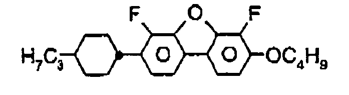 | 5,00 % | V₀ [V]: | 2,18 |

### Beispiel 4

| | | | |
|---|---|---|---|
| CY-3-O2 | 4,00% | Klärpunkt [°C]: | +75,0 |
| PYP-2-3 | 7,00% | Δn [589 nm, 20 °C]: | +0,1031 |
| CPY-2-O2 | 12,00 % | Δε [1 kHz, 20 °C]: | -2,3 |
| CC-3-V | 57,00 % | K₁ [pN, 20°C]: | 12,9 |
| 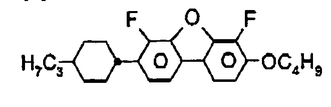 | 20,00 % | K₃ [pN, 20°C]: | 13,1 |
| | | γ₁ [mPa·s, 20 °C]: | 68 |
| | | V₀ [V]: | 2,50 |

### Beispiel 5

| | | | |
|---|---|---|---|
| CY-3-02 | 6,00% | Klärpunkt [°C]: | +74,0 |
| CCY-3-O2 | 4,00% | Δn [589 nm, 20 °C]: | +0,0923 |
| CPY-2-O2 | 10,00 % | Δε [1 kHz, 20 °C]: | -2,4 |
| CPY-3-O2 | 4,00% | γ₁ [mPa·s, 20 °C]: | 68 |
| CC-3-V | 58,00 % | V₀ [V]: | 2,41 |
| 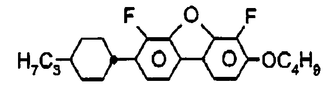 | 18,00 % | | |

### Beispiel 6

| | | | |
|---|---|---|---|
| CY-3-O4 | 15,00% | Klärpunkt [°C]: | +94,5 |
| CCY-3-O2 | 7,00 % | Δn [589 nm, 20 °C]: | +0,1103 |
| CCY-3-O3 | 12,00 % | Δε [1 kHz, 20 °C]: | -7,0 |
| CCY-4-O2 | 12,00 % | γ₁ [mPa·s, 20 °C]: | 310 |
| CPY-2-O2 | 12,00 % | | |
| CC-4-V | 18,00% | | |
| 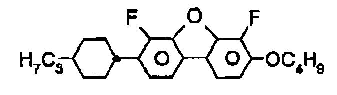 | 10,00 % | | |
| 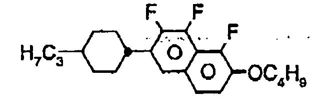 | 9,00 % | | |
| 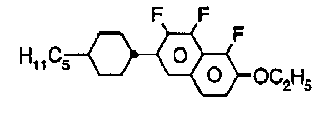 | 5,00 % | | |

## Patentansprüche

1. Flüssigkristallines Medium auf der Basis eines Gemisches von polaren Verbindungen, welches mindestens eine Verbindung der Formel I, 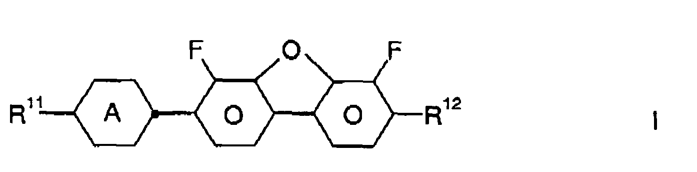 worin
R¹¹ und R¹² jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 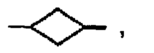 -C≡C-, -CF₂O-, -OCF₂-, -OC-O- oder -O-CO- so ersetzt sein können, dass O-Atome nicht direkt miteinander verknüpft sind, 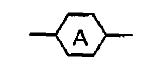
a) einen 1,4-Cyclohexenylen- oder 1,4-Cyclohexylenrest, worin eine oder zwei nicht benachbarte CH₂-Gruppen durch -O- oder -S-ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, einen Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
wobei die Reste a), b) und c) ein oder mehrfach durch Halogenatome substituiert sein können,
bedeuten,
und
zusätzlich eine oder mehrere Verbindungen der Formeln IIA und/oder IIB, 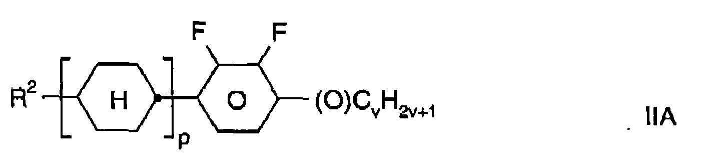 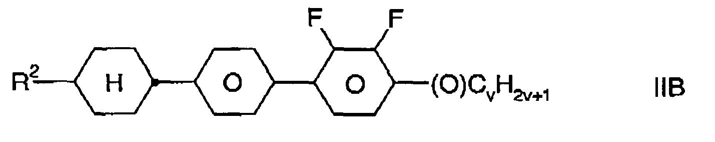 worin
R² einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 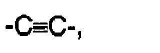 -CO-, -CO-O-, -O-CO- oder -O-CO-O- so ersetzt sein können, dass O-Atome nicht direkt miteinander verknüpft sind,
p 1 oder 2, und
v 1 bis 6
bedeutet,
enthält.

2. Flüssigkristallines Medium nach Anspruch 1, **dadurch gekennzeichnet, dass** es zusätzlich eine oder mehrere Verbindungen der Formel III, 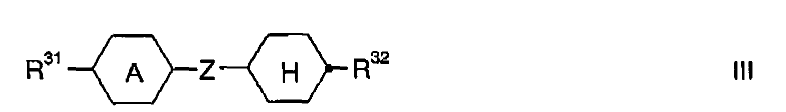 worin
R³¹ und R³² jeweils unabhängig voneinander einen geradkettigen Alkyl-, Alkenyl-, Alkylalkoxy- oder Alkoxyrest mit bis zu 12 C-Atomen, und 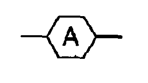 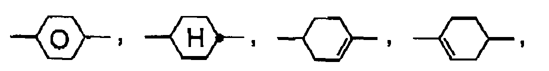 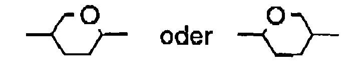 Z Einfachbindung, -CH₂CH₂-, -CH=CH-, -CF₂O-, -OCF₂-, -CH₂O-, -OCH₂-, -COO-, -OCO-, -C₂F₄-, -CF=CF-
bedeuten,
enthält.

3. Flüssigkristallines Medium nach Anspruch 1 oder 2, **dadurch gekennzeichnet, dass** es ein, zwei, drei, vier oder mehr Verbindungen der Formel I enthält.

4. Flüssigkristallines Medium nach einem oder mehreren der Ansprüche 1 bis 3, **dadurch gekennzeichnet, dass** der Anteil an Verbindungen der Formel I im Gesamtgemisch mindestens 2 Gew.% beträgt.

5. Flüssigkristallines Medium nach einem oder mehreren der Ansprüche 1 bis 4, **dadurch gekennzeichnet, dass** der Anteil an Verbindungen der Formeln IIA und/oder IIB im Gesamtgemisch mindestens 20 Gew.% beträgt.

6. Flüssigkristallines Medium nach einem oder mehreren der Ansprüche 1 bis 5, **dadurch gekennzeichnet, dass** der Anteil an Verbindungen der Formel III im Gesamtgemisch mindestens 3 Gew.% beträgt.

7. Flüssigkristallines Medium nach einem oder mehreren der Ansprüche 1 bis 6, **dadurch gekennzeichnet, dass** es mindestens eine Verbindung ausgewählt aus den Formeln I1 bis I9, 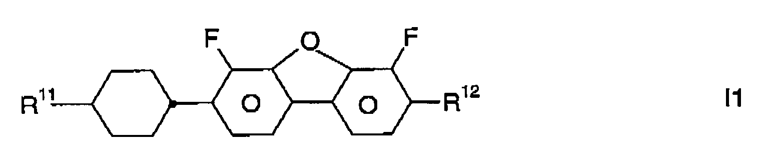 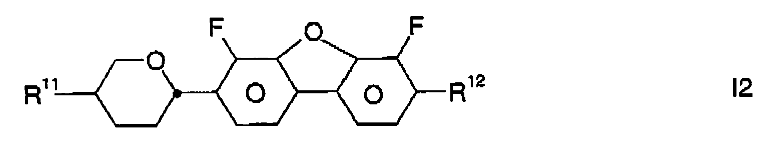 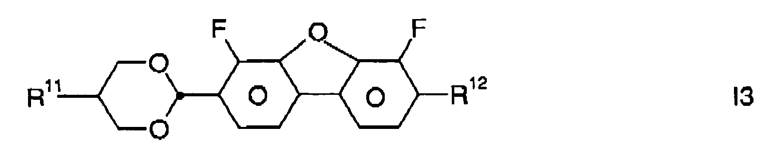 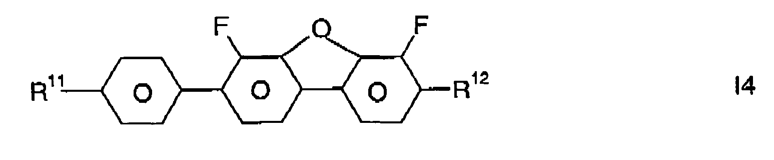 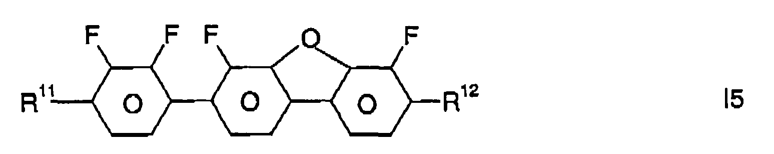 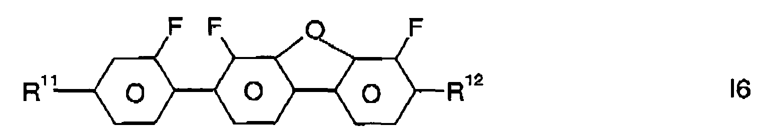 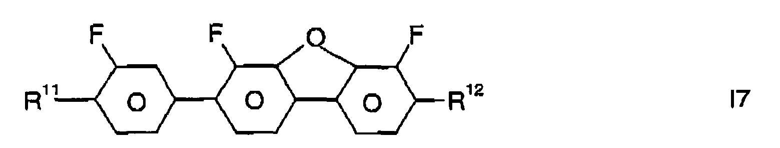 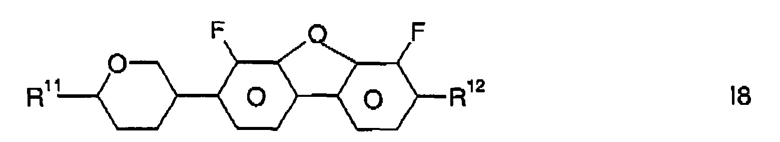 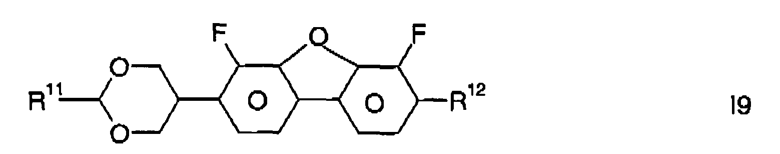 worin
R¹¹ die in Anspruch 1 angegebenen Bedeutungen hat, und Alkyl einen geradkettigen Alkylrest mit 1-6 C-Atomen bedeutet,
enthält.

8. Flüssigkristallines Medium nach einem oder mehreren der Ansprüche 1 bis 7, **dadurch gekennzeichnet, dass** es
2-20 Gew.% einer oder mehrerer Verbindungen der Formel I und
20-80 Gew.% einer oder mehrerer Verbindungen der Formeln IIA und/oder IIB
enthält,
wobei die Gesamtmenge der Verbindungen der Formeln I und IIA und/oder IIB ≤ 100 Gew.% beträgt.

9. Verfahren zur Herstellung eines flüssigkristallinen Mediums nach einem oder mehreren der Ansprüche 1 bis 8, **dadurch gekennzeichnet, dass** man eine oder mehrere Verbindungen der Formel I mit mindestens einer weiteren flüssigkristallinen Verbindung mischt und gegebenenfalls Additive zusetzt.

10. Elektrooptische Anzeige mit einer Aktivmatrix-Addressierung basierend auf dem VA-, ECB-, PALC-, FFS- oder dem IPS-Effekt, **dadurch gekennzeichnet, dass** sie als Dielektrikum ein flüssigkristallines Medium nach einem oder mehreren der Ansprüche 1 bis 8 enthält.

## Claims

1. Liquid-crystalline medium based on a mixture of polar compounds which comprises at least one compound of the formula I 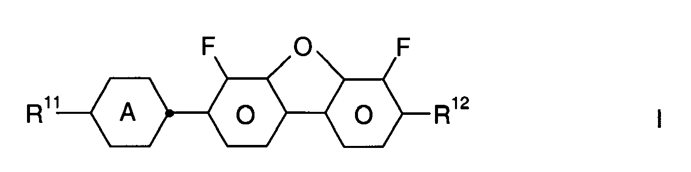 in which
R¹¹ and R¹² each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 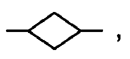 -C≡C-, -CF₂O-, -OCF₂-, -OC-O- or -O-CO- in such a way that O atoms are not linked directly to one another, 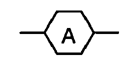 denotes
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]octylene, naphthalene-2,6-diyl, decahydronaphthalene-2,6-diyl, 1,2,3,4-tetra-hydronaphthalene-2,6-diyl, phenanthrene-2,7-diyl, fluorene-2,7-diyl,
where the radicals a), b) and c) may be mono- or polysubstituted by halogen atoms.
and
additionally one or more compounds of the formulae IIA and/or IIB 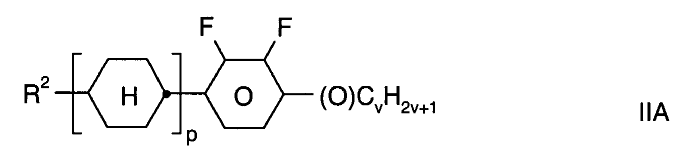 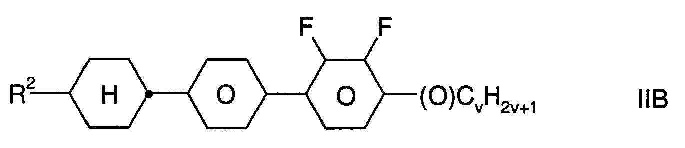 in which
R² denotes an alkyl or alkenyl radical having up to 15 C atoms which is unsubstituted, monosubstituted by CN or CF₃ or at least monosubstituted by halogen, where, in addition, one or more CH₂ groups in these radicals may each, independently of one another, be replaced by -O-, -S-, 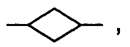 -C≡C-, -CO-, -CO-O-, -O-CO- or -O-CO-O- in such a way that O atoms are not linked directly to one another,
p denotes 1 or 2, and
v denotes 1 to 6.

2. Liquid-crystalline medium according to Claim 1, **characterised in that** it additionally comprises one or more compounds of the formula III 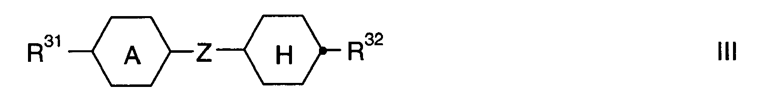 in which
R³¹ and R³² each, independently of one another, denote a straight-chain alkyl, alkenyl, alkylalkoxy or alkoxy radical having up to 12 C atoms, and 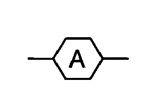 denotes 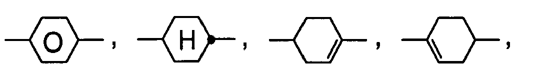 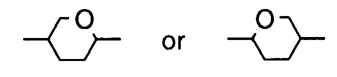 Z denotes a single bond, -CH₂CH₂-, -CH=CH-, -CF₂O-, -OCF₂-, -CH₂O-, -OCH₂-, -COO-, -OCO-, -C₂F₄-, -CF=CF-.

3. Liquid-crystalline medium according to Claim 1 or 2, **characterised in that** it comprises one, two, three, four or more compounds of the formula I.

4. Liquid-crystalline medium according to one or more of Claims 1 to 3, **characterised in that** the proportion of compounds of the formula I in the mixture as a whole is at least 2% by weight.

5. Liquid-crystalline medium according to one or more of Claims 1 to 4, **characterised in that** the proportion of compounds of the formulae IIA and/or IIB in the mixture as a whole is at least 20% by weight.

6. Liquid-crystalline medium according to one or more of Claims 1 to 5, **characterised in that** the proportion of compounds of the formula III in the mixture as a whole is at least 3% by weight.

7. Liquid-crystalline medium according to one or more of Claims 1 to 6, **characterised in that** it comprises at least one compound selected from the formulae I1 to I9 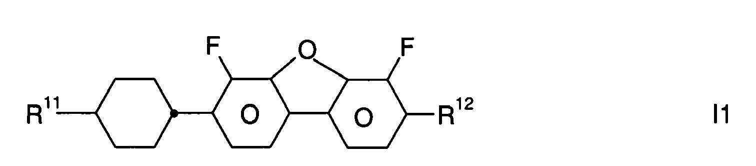 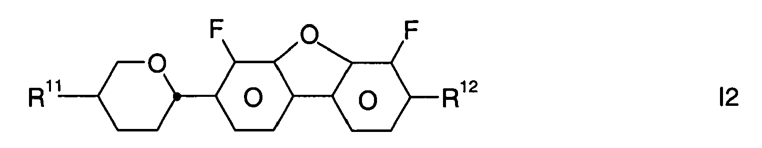 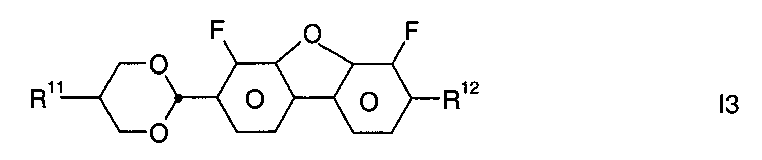 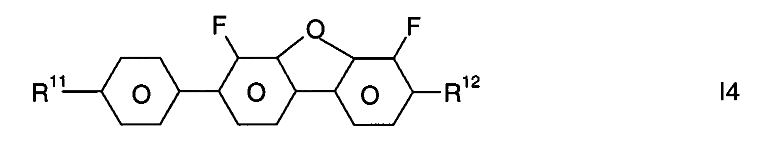 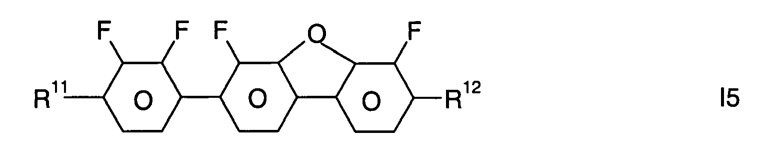 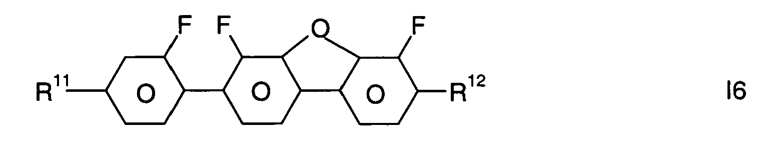 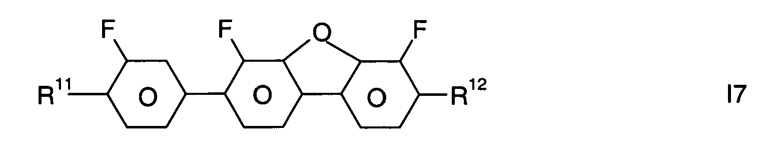 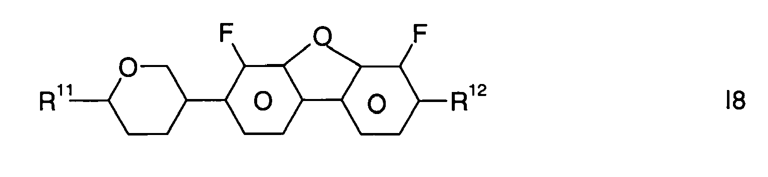 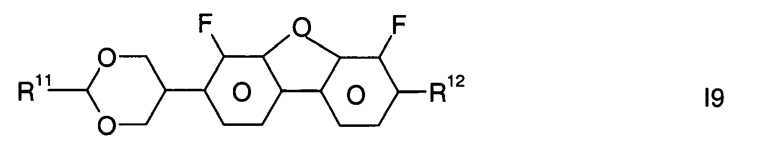 in which
R¹¹ has the meanings indicated in Claim 1, and alkyl denotes a straight-chain alkyl radical having 1-6 C atoms.

8. Liquid-crystalline medium according to one or more of Claims 1 to 7, **characterised in that** it comprises
2-20% by weight of one or more compounds of the formula I and
20-80% by weight of one or more compounds of the formulae IIA and/or IIB,
where the total amount of the compounds of the formulae I and IIA and/or IIB is ≤ 100% by weight.

9. Process for the preparation of a liquid-crystalline medium according to one or more or Claims 1 to 8, **characterised in that** one or more compounds of the formula I are mixed with at least one further liquid-crystalline compound, and additives are optionally added.

10. Electro-optical display with active-matrix addressing based on the VA, ECB, PALC, FFS or IPS effect, **characterised in that** it contains, as dielectric, a liquid-crystalline medium according to one or more of Claims 1 to 8.

## Revendications

1. Milieu cristallin liquide à base d'un mélange de composés polaires qui comprend au moins un composé de la formule I 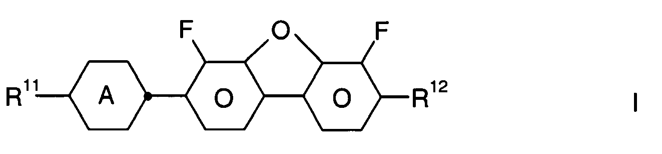 dans laquelle
R¹¹ et R¹² chacun, indépendamment l'un de l'autre, représente H, un radical alkyle ou alkényle ayant jusqu'à 15 atomes de C qui est non substitué, monosubstitué par CN ou CF₃ ou au moins monosubstitué par halogène, où, en addition, un ou plusieurs groupes CH₂ dans ces radicaux peuvent être remplacés par -O-, -S-, 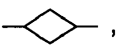 -C≡C-, -CF₂O-, -OCF₂-, -OC-O- ou -O-CO- de telle sorte que des atomes de O ne soient pas liés directement à un autre, 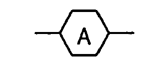 représente
a) un radical 1,4-cyclohexénylène ou 1,4-cyclohexylène, dans lequel un ou deux groupes CH₂ non adjacents peuvent être remplacés par -O-ou -S-,
b) un radical 1,4-phénylène, dans lequel un ou deux groupes CH peuvent être remplacés par N,
c) un radical provenant du groupe pipéridine-1,4-diyle, 1,4-bicyclo[2.2.2]octylène, naphtalène-2,6-diyle, décahydronaphtalène-2,6-diyle, 1,2,3,4-tétrahydronaphtalène-2,6-diyle, phén-anthrène-2,7-diyle, fluorène-2,7-diyle,
où les radicaux a), b) et c) peuvent être mono- ou polysubstitués par des atomes d'halogène,
et
additionnellement un ou plusieurs composés des formules IIA et/ou IIB 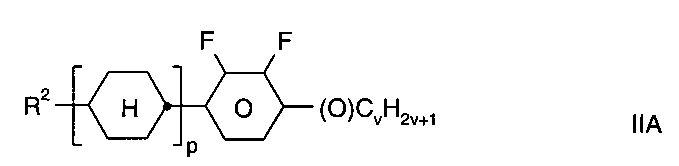 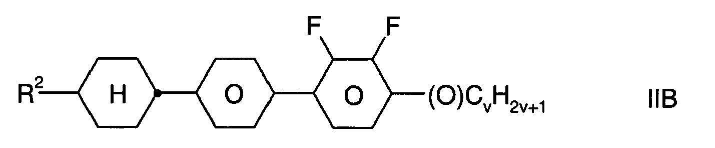 dans lesquelles
R² représente un radical alkyle ou alkényle ayant jusqu'à 15 atomes de C qui est non substitué, monosubstitué par CN ou CF₃ ou au moins monosubstitué par halogène, où, en addition, un ou plusieurs groupes CH₂ dans ces radicaux peuvent chacun, indépendamment les uns des autres, être remplacés par -O-, -S-, 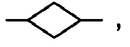 -C≡C-, -CO-, -CO-O-, -O-CO- ou -O-CO-O- de telle sorte que des atomes de O ne soient pas liés directement à un autre,
p représente 1 ou 2, et
v représente 1 à 6.

2. Milieu cristallin liquide selon la revendication 1, **caractérisé en ce qu'**il comprend additionnellement un ou plusieurs composés de la formule III 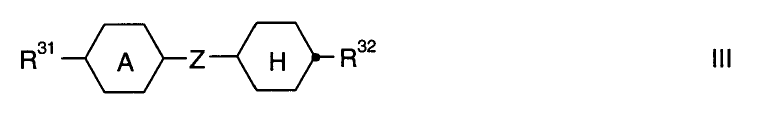 dans laquelle
R³¹ et R³² chacun, indépendamment l'un de l'autre, représente un radical alkyle, alkényle, alkylalcoxy ou alcoxy en chaîne droite ayant jusqu'à 12 atomes de C, et 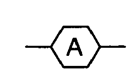 représente 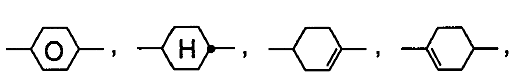 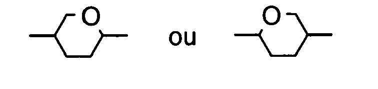 Z représente une liaison simple, -CH₂CH₂-, -CH=CH-, -CF₂O-, -OCF₂-, -CH₂O-, -OCH₂-, -COO-, -OCO-, -C₂F₄-, -CF=CF-.

3. Milieu cristallin liquide selon la revendication 1 ou 2, **caractérisé en ce qu'**il comprend un, deux, trois, quatre ou plus de quatre composés de la formule I.

4. Milieu cristallin liquide selon une ou plusieurs des revendications 1 à 3, **caractérisé en ce que** la proportion de composés de la formule I dans le mélange dans son ensemble est d'au moins 2% en poids.

5. Milieu cristallin liquide selon une ou plusieurs des revendications 1 à 4, **caractérisé en ce que** la proportion de composés des formules IIA et/ou IIB dans le mélange dans son ensemble est d'au moins 20% en poids.

6. Milieu cristallin liquide selon une ou plusieurs des revendications 1 à 5, **caractérisé en ce que** la proportion de composés de la formule III dans le mélange dans son ensemble est d'au moins 3% en poids.

7. Milieu cristallin liquide selon une ou plusieurs des revendications 1 à 6, **caractérisé en ce qu'**il comprend au moins un composé choisi parmi les formules I1 à I9 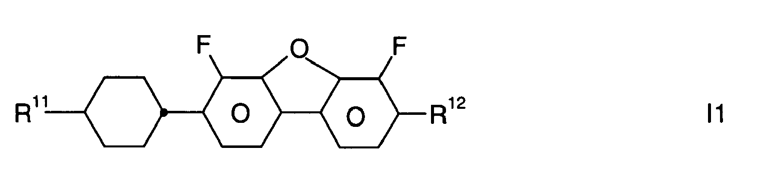 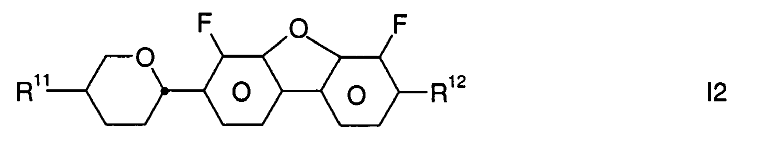 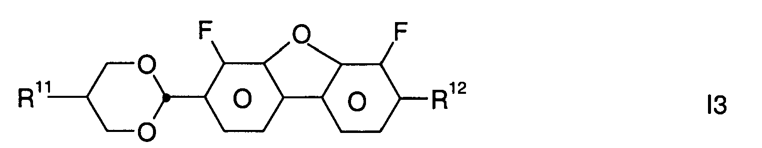 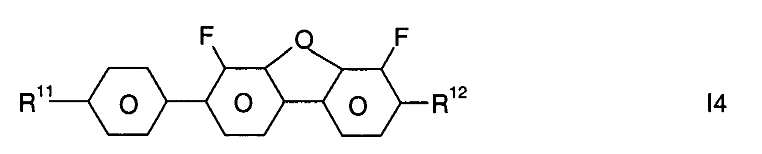 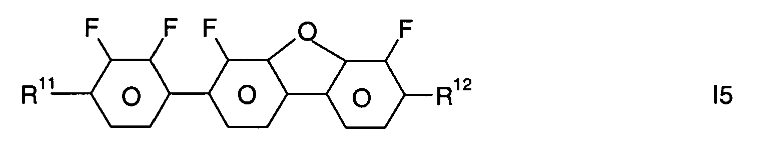 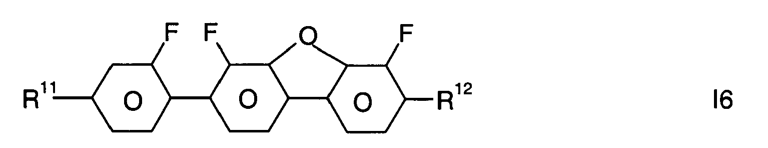 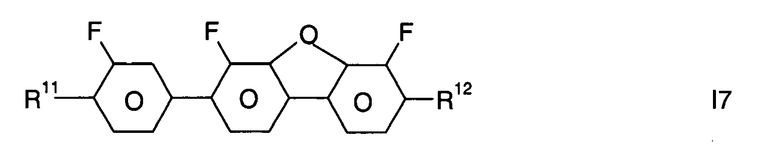 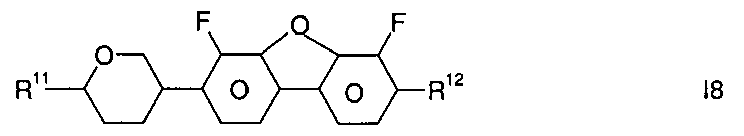 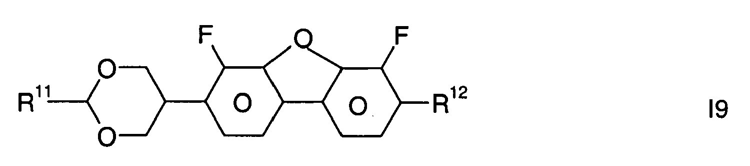 dans lesquelles
R¹¹ a la signification indiquée dans la revendication 1, et alkyle représente un radical alkyle en chaîne droite ayant 1-6 atomes de C.

8. Milieu cristallin liquide selon une ou plusieurs des revendications 1 à 7, **caractérisé en ce qu'**il comprend
2-20% en poids d'un ou plusieurs composés de la formule I et
20-80% en poids d'un ou plusieurs composés des formules IIA et/ou IIB,
où la quantité totale des composés des formules I et IIA et/ou IIB est ≤ 100% en poids.

9. Procédé pour la préparation d'un milieu cristallin liquide selon une ou plusieurs des revendications 1 à 8, **caractérisé en ce qu'**un ou plusieurs composés de la formule I sont mélangés avec au moins un autre composé cristallin liquide, et des additifs sont optionnellement ajoutés.

10. Affichage électro-optique avec adressage par matrice active basé sur un effet VA, ECB, PALC, FFS ou IPS, **caractérisé en ce qu'**il contient, en tant que diélectrique, un milieu cristallin liquide selon une ou plusieurs des revendications 1 à 8.
